(19) Europäisches Patentamt
European Patent Office
Office européen des brevets

(11) **EP 4 403 998 A1**

(12) **EUROPEAN PATENT APPLICATION**
published in accordance with Art. 153(4) EPC

(43) Date of publication:
**24.07.2024 Bulletin 2024/30**

(21) Application number: **22885437.8**

(22) Date of filing: **08.09.2022**

(51) International Patent Classification (IPC):
**G03B 21/00** (2006.01)    **G02B 27/01** (2006.01)

(52) Cooperative Patent Classification (CPC):
**B60R 1/22; G02B 27/01; G02B 27/28; G03B 21/00**

(86) International application number:
**PCT/CN2022/117928**

(87) International publication number:
**WO 2023/071548 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021  CN 202111271734**

(71) Applicant: **Huawei Technologies Co., Ltd.
Shenzhen, Guangdong 518129 (CN)**

(72) Inventors:
• **HUANG, Dongchen
Shenzhen, Guangdong 518129 (CN)**
• **LI, Honghui
Shenzhen, Guangdong 518129 (CN)**
• **XIAO, Zhuangyi
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **OPTICAL DISPLAY APPARATUS, DISPLAY SYSTEM, VEHICLE, AND COLOR ADJUSTMENT METHOD**

(57)    An optical display apparatus, a display system, a vehicle, and a color adjustment method are provided to resolve a problem of an image color cast in the conventional technology, and can be applied to fields such as manual driving or an in-vehicle infotainment. The optical display apparatus includes: a light source module, configured to emit light (where the light is combined by light of at least two colors); a light splitting module, configured to split the light into a first path of light and a second path of light, propagate the first path of light to a sensing module, and propagate the second path of light to a modulation module; the modulation module, configured to modulate the second path of light, to obtain image light that carries image information; and the sensing module, configured to obtain color information of the first path of light, where the color information is for adjusting weights of the light of the at least two colors. The first path of light is used as color calibration of the light, the color information is obtained based on the first path of light, and the weights of the light of the at least two colors are adjusted based on the color information, so that color correction of the image light can be implemented, thereby helping reduce a color cast of an image formed by the image light.

FIG. 3

EP 4 403 998 A1

**Description**

**CROSS-REFERENCE TO RELATED APPLICATIONS**

This application claims priority to Chinese Patent Application No. 202111271734.X, filed with the China National Intellectual Property Administration on October 29, 2021 and entitled "OPTICAL DISPLAY APPARATUS, DISPLAY SYSTEM, VEHICLE, AND COLOR ADJUSTMENT METHOD", which is incorporated herein by reference in its entirety.

**TECHNICAL FIELD**

This application relates to the field of image display technologies, and in particular, to an optical display apparatus, a display system, a vehicle, and a color adjustment method.

**BACKGROUND**

With the continuous development of technologies, increasingly high requirements are imposed on convenience and safety of using a vehicle. For example, wide application of a head up display (head up display, HUD) (or referred to as head-up display) system can improve the safety of using the vehicle. The head up display system is a system that projects driving-related information (such as instrument information or navigation information) to a front field of view of a driver. The driver can see the instrument information and navigation information in front of the field of view, without a need of looking down and observing a dashboard or central control display screen under a steering wheel, to increase a braking response time in an emergency and improve driving safety. The vehicle travels in a complex environment. For example, due to different seasons, a damp environment in spring, a high temperature environment and a rainstorm environment in summer, a strong wind environment in autumn, and a cold snow environment in winter may occur. All these may affect components in the HUD to some extent. Therefore, the HUD needs to set a specific operating mode based on a specific environment. In this case, an image (or referred to as a picture) displayed by an optical display apparatus (or referred to as an optical machine) in the HUD may be set to be of a specific brightness and color (which may be represented by a color coordinate). However, an environment difference may cause a color cast, brightness attenuation, or the like on the image displayed by the optical display apparatus. The color cast means that a color of a displayed actual image is clearly different from a color of a real image.

In conclusion, how to reduce the color cast of the image displayed by the optical display apparatus is an urgent technical problem that needs to be resolved currently.

**SUMMARY**

This application provides an optical display apparatus, a display system, a vehicle, and a color adjustment method, to reduce a color cast of an image displayed by the optical display apparatus. According to a first aspect, this application provides an optical display apparatus. The optical display apparatus includes a light source module, a light splitting module, a modulation module, and a sensing module. The light source module is configured to emit (output) light. The light is combined by light of at least two colors. The light splitting module is configured to split the light from the light source module into a first path of light and a second path of light, propagate the first path of light to the sensing module, and propagate the second path of light to the modulation module. The modulation module is configured to modulate the second path of light, to obtain image light that carries image information. The sensing module is configured to obtain color information of the first path of light. The color information is used by the light source module to adjust weights of the light of the at least two colors. The module may be referred to as a component or a module, for example, a light source component, a light source module, a modulation component, and a modulation module.

Based on this solution, color information of light currently emitted by the light source module may be detected by the sensing module, that is, the first path of light may be used as color calibration of the light emitted by the light source module. Further, based on the color information detected by the sensing module based on the first path of light, the weights of the light of the at least two colors of the combined light are adjusted, so that color correction of the image light can be implemented without increasing an optical structure, to help reduce a color cast (or referred to as a chromatic aberration) of an image displayed by the optical display apparatus.

For example, the following shows three possible solutions for adjusting the weights of the light of the at least two colors based on the color information.

Implementation 1: The light source module adjusts the weights of the light of the at least two colors based on the color information.

In a possible implementation, the light source module includes a processing component and a light emitting component. The processing component is configured to: receive the color information from the sensing module; generate, based on the color information, a control signal for adjusting the weights of the light of the at least two colors; and send the control signal to the light emitting component. The light emitting component is configured to adjust the weights of the light of the at least two colors based on the control signal.

Based on the implementation 1, the processing component in the light source module may control, based on the color information obtained from the sensing module, the light emitting component to adjust a weight of light of each color of the combined light, to reduce a color cast of an image formed based on the light as much as possible. In addition, because the sensing module is mainly configured to detect the color information of the first path of light, a structure and an operational logic of an existing sensing module do not need to be changed, so that the existing sensing module is compatible.

Further, optionally, the processing component is specifically configured to determine a color coordinate of the image light based on the received color information, and generate the control signal if a difference between the color coordinate of the image light and a preset target color coordinate is greater than a threshold.

The control signal is generated when the difference between the color coordinate of the image light and the preset target color coordinate is greater than the threshold, so that the weight of the light of each color of the combined light can be avoided from being frequently adjusted, to reduce an operation amount of the processing component.

Implementation 2: The sensing module controls the light source module to adjust the weights of the light of the at least two colors based on the color information.

In a possible implementation, the sensing module is configured to: obtain the color information of the first path of light; generate a control signal based on the color information; and send the control signal for adjusting the weights of the light of the at least two colors to the light source module. Based on the implementation 2, the light source module may be controlled by the sensing module to adjust the weights of the light of the at least two colors. A structure and an operational logic of an existing light source module may not be changed, so that the existing light source module is compatible.

Implementation 3: A processing component (which may be referred to as a processing module herein) independent of the light source module and the sensing module may control the light source module to adjust the weights of the light of the at least two colors based on the color information. In a possible implementation, the optical display apparatus further includes a processing module.

The processing module is configured to receive the color information from the sensing module, generate the control signal based on the color information, and send the control signal to the light source module. The control signal is for adjusting the weights of the light of the at least two colors. Based on the implementation 3, when an existing sensing module and light source module are compatible, the light source module may be controlled by the processing module to adjust the weights of the light of the at least two colors. The processing component may be a processor. For the foregoing implementation 1, implementation 2, and implementation 3, the light source module may be configured to adjust the weights of the light of the at least two colors based on the received control signal.

Further, optionally, the control signal may include a weight of a current of a light source corresponding to the light of each color. It should be understood that a light source corresponding to light of one color refers to a light source that emits light of the color.

In a possible implementation, the light emitting component in the light source module includes a first light source, a second light source, and a third light source.

Further, the first light source is configured to emit red light, the second light source is configured to emit blue light, and the third light source is configured to emit green light. Weights of red light, green light, and blue light may be adjusted by controlling weights of currents input to the first light source, the second light source, and the third light source.

Further, optionally, the light source module may further include a first dichroic mirror and a second dichroic mirror. The first dichroic mirror is configured to reflect the blue light from the second light source and transmit the green light from the third light source. The second dichroic mirror is configured to reflect the red light from the first light source, transmit the green light transmitted by the first dichroic mirror, and transmit the blue light reflected by the first dichroic mirror. A dichroic mirror may be referred to as a dichromic mirror or a light-combination mirror.

Based on the first dichroic mirror and the second dichroic mirror, the third light source for emitting the green light can be placed at a position that is farthest away from the light splitting module. In this way, a brightness of an image can be balanced as much as possible. The green light has a greatest impact on the brightness of the image. The third light source is placed at the position that is farthest away from the light splitting module, so that an impact of the red light, the green light, and the blue light on the brightness of the image can be balanced as much as possible.

In a possible implementation, the light splitting module includes a polarizing beam splitter, configured to: split the light from the light source module into first polarized light and second polarized light, propagate the first polarized light to the sensing module, and propagate the second polarized light to the modulation module. It should be understood that polarization states of the first polarized light and the second polarized light are different, and color information and the like are consistent.

Further, the first polarized light is P-polarized light, and the second polarized light is S-polarized light; or the first polarized light is S-polarized light, and the second polarized light is P-polarized light.

The light from the light source module may be split into the first polarized light and the second polarized light by the polarizing beam splitter. Further, the first polarized light emitted into the sensing module may be S-polarized light, and correspondingly, the second polarized light emitted into the modulation module is P-polarized light; or the first polarized light emitted into the sensing module may also be P-polarized light, and correspondingly, the second polarized light emitted into the modulation module is S-polarized light.

In another possible implementation, the light splitting module includes a transflective part (for example, a semi-transparent semi-reflective part). The first path of light is light transmitted from the transflective part, and the second path of light is light reflected from the transflective part; or the first path of light is light reflected from the transflective part, and the second path of light is light transmitted from the transflective part.

The light from the light source module may be split into the first path of light and the second path of light by the transflective part. Polarization states of the two paths of light may be the same. Further, optionally, if the light splitting module is the transflective part, the light source module may further include a polarizer, or the optical display apparatus may further include a polarizer. In a possible implementation, the optical display apparatus may further include an optical lens, and the optical lens is configured to project, to a space area, image light output by the modulation module.

The image light output by the modulation module may be shaped and/or uniformized by the optical lens, to help improve quality of an image formed based on the image light.

The optical display apparatus provided in the first aspect may be referred to as a picture generation unit (picture generation unit, PGU) or an optical machine, and the PGU may be used in various display systems. For example, the PGU may be used in a projector, a head up display system, a head-mounted optical display apparatus, or a desktop display.

According to a second aspect, this application provides a display system, including the optical display apparatus according to the first aspect or any one of the possible implementations of the first aspect, and a spatial light amplification module located in a space area. The spatial light amplification module is configured to amplify an image corresponding to image light from the optical display apparatus.

The display system may include but is not limited to a projector, an HUD system, a desktop display, a head-mounted optical display apparatus, or the like.

For example, the spatial light amplification module may include at least one curved reflective mirror, or include at least one cylindrical mirror, or include a combination of at least one curved reflective mirror and at least one cylindrical mirror.

According to a third aspect, this application provides a vehicle, including the display system according to the second aspect or any one of the possible implementations of the second aspect and a windshield. The windshield is configured to reflect and image the image light from the display system, for example, reflect the image light to an eye movement range (an eyebox position) of the vehicle.

According to a fourth aspect, this application provides a color adjustment method, which may be applied to an optical display apparatus. The optical display apparatus includes a light source module, a light splitting module, a modulation module, and a sensing module.

The method includes controlling the light source module to emit light. The light is combined by light of at least two colors, and the light is split into a first path of light and a second path of light by the light splitting module. The method includes controlling the modulation module to modulate the second path of light, to obtain image light that carries image information. The method includes controlling the sensing module to obtain color information of the first path of light. The method further includes controlling the light source module to adjust weights of the light of the at least two colors based on the color information.

In a possible implementation, a color coordinate of the image light may be determined based on the color information. If a difference between the color coordinate of the image light and a preset target color coordinate is greater than a threshold, a weight control signal for controlling and adjusting the light of the at least two colors is generated, and the control signal is sent to the light source module, to control the light source module to adjust the weights of the light of the at least two colors based on the control signal.

According to a fifth aspect, this application provides a color adjustment apparatus. The color adjustment apparatus is configured to implement the method according to the fourth aspect or any one of the possible implementations of the fourth aspect, and includes corresponding functional modules which are respectively configured to implement steps in the foregoing method. The function may be implemented by hardware, or may be implemented by executing corresponding software by hardware. The hardware or software includes one or more modules corresponding to the foregoing functions.

According to a sixth aspect, this application provides an optical display apparatus. The optical display apparatus may include a light source module, a light splitting module, a modulation module, and a sensing module. The light source module is configured to emit light, and the light is combined by light of at least two colors. The light splitting module is configured to split the light from the light source module into a first path of light and a second path of light, propagate the first path of light to the sensing module, and propagate the second path of light to the modulation module. The modulation module is configured to modulate the second path of light, to obtain image light that carries image information. The sensing module is configured to obtain color information of the first path of light, generate a control signal based on the color information, and send the control signal to the light source module. The light source module is further configured to adjust weights of the light of the at least two colors based on the control signal.

According to a seventh aspect, this application provides an optical display apparatus. The optical display apparatus may include a light source module, a light splitting module, a modulation module, a sensing module, and a processing module. The light source module is configured to emit light, and the light is combined by light of at least two colors. The light splitting module is configured to split the light from the light source module into a first path of light and a second path of light, propagate the first path of light to the sensing module, and propagate the second path of light to the modulation module. The modulation module is configured to modulate the second path of light, to obtain image light that carries image information. The sensing module is configured to obtain color information of the first path of light, and send the color information to the processing module. The processing module is configured to generate a control signal based on the color information, and send the control signal to the light source module. The control signal is used by the light source module to adjust weights of the light of the at least two colors. The light source module is further configured to adjust weights of the light of the at least two colors based on the control signal.

According to an eighth aspect, this application provides a chip, including at least one processor and an interface circuit. Further, optionally, the chip may further include a memory. The processor is configured to execute a computer program or instructions stored in the memory, so that the chip performs the method according to the fourth aspect or any one of the possible implementations of the fourth aspect.

According to a ninth aspect, this application provides a computer-readable storage medium. The computer-readable storage medium stores a computer program or instructions, and when the computer program or the instructions is/are executed by a control apparatus, the control apparatus is enabled to perform the method according to the fourth aspect or any one of the possible implementations of the fourth aspect.

According to a tenth aspect, this application provides a computer program product. The computer program product includes a computer program or instructions, and when the computer program or the instructions is/are executed by a control apparatus, the control apparatus is enabled to perform the method according to the fourth aspect or any one of the possible implementations of the fourth aspect.

For technical effects that can be achieved in any one of the second aspect to the tenth aspect, reference may be made to the foregoing descriptions of the beneficial effects in the first aspect. Details are not described herein again.

## BRIEF DESCRIPTION OF DRAWINGS

FIG. 1a to FIG. 1c are schematic diagrams of possible application scenarios according to this application;
FIG. 2 is a schematic diagram of another possible application scenario according to this application;
FIG. 3 is a schematic diagram of a structure of an optical display apparatus according to this application;
FIG. 4a is a schematic diagram of a structure of a light source module according to this application;
FIG. 4b is a schematic diagram of a structure of another light source module according to this application;
FIG. 4c is a schematic diagram of a structure of a light uniformizing component according to this application;
FIG. 5a is a schematic diagram of a light splitting principle of a polarizing beam splitter according to this application;
FIG. 5b is a schematic diagram of a structure of a transflective part according to this application;
FIG. 5c is a schematic diagram of a structure of a liquid crystal on silicon LCoS according to this application;
FIG. 6 is a schematic diagram of a structure of an optical lens according to this application;
FIG. 7a is a schematic diagram of a structure of another optical display apparatus according to this application;
FIG. 7b is a schematic diagram of a structure of still another optical display apparatus according to this application;
FIG. 7c is a schematic diagram of a structure of yet another optical display apparatus according to this application;
FIG. 8 is a schematic diagram of a structure of another optical display apparatus according to this application;
FIG. 9a is a schematic flowchart of a color adjustment method according to this application;
FIG. 9b is a schematic diagram of a current of a PWM input to a light source module according to this application;
FIG. 10 is a schematic flowchart of a method for adjusting a color initialization process of an image according to this application;
FIG. 11 is a schematic diagram of a structure of another optical display apparatus according to this application;
FIG. 12a is a schematic diagram of a structure of still another optical display apparatus according to this application;
FIG. 12b is a schematic diagram of a circuit of an optical display apparatus according to this application;
FIG. 13a is a schematic diagram of a partial structure of a vehicle according to this application;
FIG. 13b is a schematic diagram of a functional framework of a vehicle according to this application;

FIG. 14 is a schematic flowchart of a color adjustment method according to this application;
FIG. 15 is a schematic diagram of a structure of a control apparatus according to this application; and
FIG. 16 is a schematic diagram of a structure of a control apparatus according to this application.

## DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

1. Color coordinate

A color coordinate is also referred to as a color specification system. The color coordinate can accurately represent a color. Generally, a lateral axis of the color coordinate is x, and a vertical axis is y. A point may be determined using a color coordinate on a chromaticity diagram. The point may be referred to as a color point. A color coordinate (x, y) may be used to represent a color point.

2. Spectrum

A spectrum usually refers to a pattern in which monochromatic light that is dispersed is sequentially arranged based on a wavelength (or frequency) after polychromatic light is split by a dispersion system.

3. Spectral tristimulus values

Spectral tristimulus values are numerical values for approximately describing three types of stimulus intensity of a color. In color matching, three colors for color blending (or called combination) to produce any color are called three primary colors (or tricolors). Generally, three colors red, green, and blue are used as the three primary colors. Quantities of three primary colors that match equal energy spectrum colors are called the spectral tristimulus values which are represented by symbols r, g, and b.

4. Pulse width modulation (pulse width modulation, PWM) waveform

A pulse width modulation waveform is a pulse waveform with a variable duty cycle. In the PWM, an amplitude of each pulse is equal. To change an amplitude of an equivalent output waveform, it only needs to change a width of each pulse based on a same proportion coefficient. A principle of the pulse width modulation is as follows: An on/off status of a switch element of an inverter circuit is controlled (for example, a conduction time of the switch element may be specifically controlled), so that an output end obtains a series of pulses with a same amplitude, and the pulses are used to replace a sine wave or a required waveform. 5. Dichroic mirror

A dichroic mirror may also be referred to as a dichroic mirror, a dichroic mirror, or a light-combination mirror. A feature is that light of a specific wavelength is almost completely transmitted, and light of other wavelengths is almost completely reflected. For example, a dichroic mirror 1 may transmit blue light and reflect green light. In other words, the blue light may be almost completely transmitted when transmitted to the dichroic mirror 1, and the green light is almost completely reflected by the dichroic mirror 1. For another example, a dichroic mirror 2 may transmit blue light and green light, and reflect red light. In other words, the blue light and the green light may be almost completely transmitted when transmitted to the dichroic mirror 2, and the red light may be almost completely reflected by the dichroic mirror 2. In this application, light of which wavelengths is transmitted by the dichroic mirror and light of which wavelengths is reflected by the dichroic mirror are not limited. The dichroic mirror may be selected based on an actual requirement.

6. Tricolor

A tricolor is a "primary color" that cannot be obtained by blending other colors. Generally, the tricolor refers to red, green, and blue, that is, R (Red), G (Green), and B (Blue). It may also be understood as that the three primary colors are independent of each other, and any one of the primary colors cannot be obtained by blending the other two primary colors.

The three primary colors are combined (or referred to as blended) based on different percentages (that is, weights), and light of different colors may be obtained. A brightness of the combined light is determined based on a sum of brightnesses of the three primary colors, and a chrominance (which may be represented by a color coordinate) of the combined light is determined based on weights of the three primary colors.

The foregoing describes some terms in this application, and the following describes technical solutions in this application.

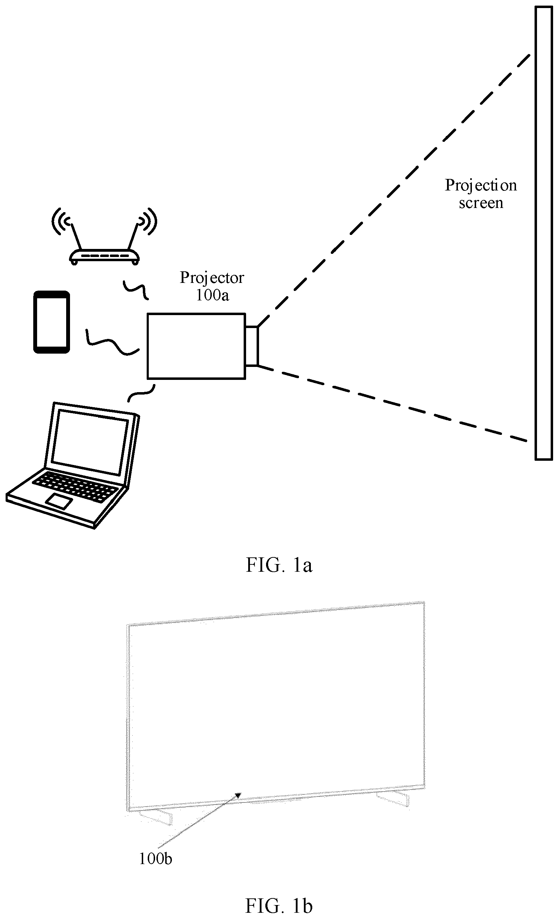

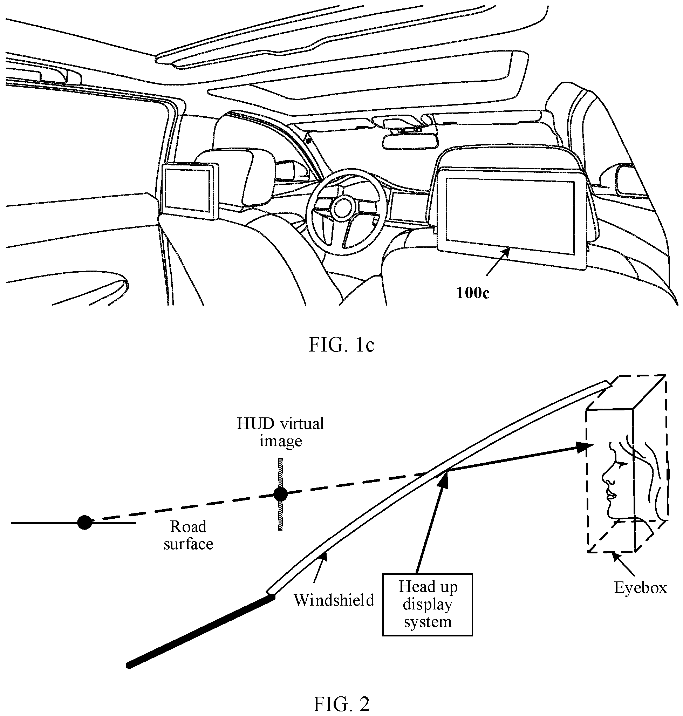

This application provides an optical display apparatus, a display system, a vehicle, and a corresponding color adjustment method. The optical display apparatus may be integrated into a projector 100a shown in FIG. 1a, and the projector 100a may project an image onto a wall or a projection screen. Alternatively, the optical display apparatus may be integrated into a display 100b shown in FIG. 1b for use. Alternatively, the optical display apparatus may be integrated into an in-vehicle display screen (for example, as shown in 100c in FIG. 1c), and the in-vehicle display screen may be installed at a rear of a seat of a vehicle, a front passenger position, or the like. A position for installing the in-vehicle display screen is not limited in this application. Alternatively, the optical display apparatus may be integrated into a head up display system shown in FIG. 2, and the head up display system may display driving assistance information.

Further, optionally, an example in which the optical display apparatus is integrated into a HUD system and the HUD system is applied to a vehicle is used for description. The HUD system can project a formed image (called an HUD virtual image) to a front field of view of a driver, and converge the image with real road profile information, to enhance perception of an actual driving environment by the driver. For example, the HUD system may superimpose, on a real environment outside the vehicle, an HUD virtual image that carries navigation information and/or instrument information (such as a vehicle speed, a rotation speed, a temperature, and an oil amount), to enable the driver to obtain a visual effect of augmented reality. Specifically, the system may be applied to scenarios such as AR navigation, adaptive tour, and lane deviation warning. The HUD system includes but is not limited to a windshield (Windshield, W)-HUD system, an augmented reality head up display (augmented reality head up display, AR-HUD), and the like.

It should be understood that the foregoing scenario is merely an example, and the method and the apparatus provided in this application may be further applied to a plurality of scenarios, but are not limited to the scenario shown in the foregoing example.

As described in the background, because the vehicle travels in a complex environment, to adapt to different environments, the HUD needs to set a specific operating mode based on a specific environment. This may cause an image (or referred to as a picture) displayed by an optical display apparatus in the HUD to be set to be of a specific color, causing a problem such as a color cast of the image displayed by the optical display apparatus.

In view of this, this application provides an optical display apparatus. The optical display apparatus may correct a color of a to-be-displayed image by detecting, via a sensing module, color information of light currently emitted by a light source module, to help reduce a color cast of an image displayed by the optical display apparatus.

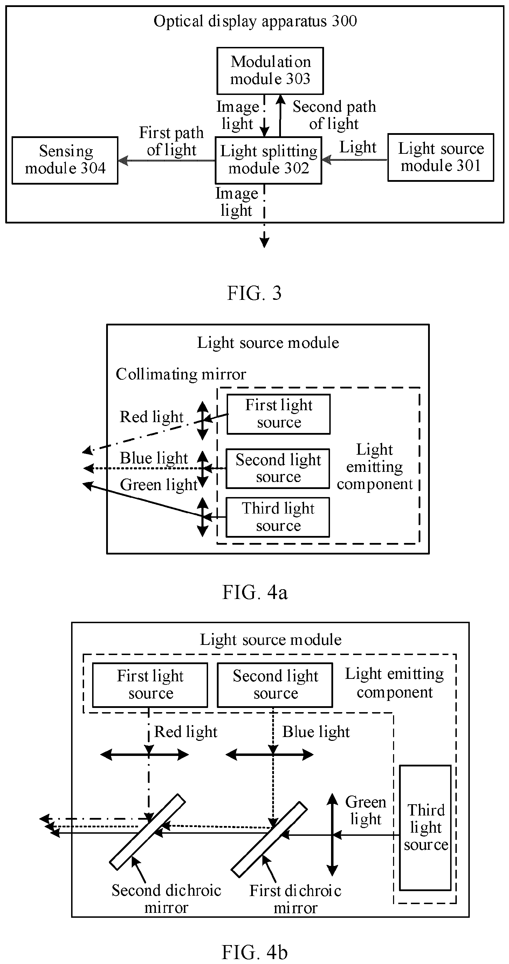

Based on the foregoing content, the following specifically describes the optical display apparatus provided in this application with reference to FIG. 3 to FIG. 10.

FIG. 3 is a schematic diagram of a structure of an optical display apparatus according to this application. The optical display apparatus 300 may include a light source module 301, a light splitting module 302, a modulation module 303, and a sensing module 304. The light source module 301 is configured to emit light, where the light may be combined by light of at least two colors. For example, the light may be obtained by blending red light, green light, and blue light. The light splitting module 302 is configured to split the light from the light source module 301 into a first path of light and a second path of light, propagate the first path of light to the sensing module 304, and propagate the second path of light to the modulation module 303, where polarization states of the first path of light and the second path of light may be the same or different, and color information and the like are consistent. The modulation module 303 is configured to modulate the second path of light (for example, perform amplitude modulation and/or phase modulation), to obtain image light. The image light is light that carries image information (such as navigation information and/or instrument information). The sensing module 304 is configured to obtain color information of the first path of light, where the color information is used by the light source module to adjust weights of the light of the at least two colors.

Based on the foregoing optical display apparatus, color information of light currently emitted by the light source module may be detected by the sensing module, that is, the first path of light may be used as color calibration of the light emitted by the light source module. Further, based on the color information detected by the sensing module based on the first path of light, the weights of the light of the at least two colors of the combined light are adjusted, so that color correction of the image light can be implemented without increasing an optical structure, to help reduce a color cast of an image displayed by the optical display apparatus.

It should be understood that a sum of weights of light of various colors in the light of the at least two colors of the combined light is a fixed value (for example, 100%). If a weight of light of at least one color is changed, a weight of light of at least one color in light of other remaining colors is changed accordingly. In other words, adjusting the weights of the light of the at least two colors may be changing a weight of light of each color in the at least two colors, or may be changing weights of light of a part of colors in the at least two colors (herein, the at least two colors may be three or more). This is not limited in this application.

It should be noted that, in the optical display apparatus, a factor that is affected by an environment (for example, a temperature) and that causes a large color cast of an image displayed by the optical display apparatus is a light source module. Therefore, the color cast of the image can be effectively improved by monitoring color information of light emitted by the light source module.

The following separately describes the functional modules shown in FIG. 3, to provide an example of a specific implementation solution. For ease of description, no digital identifier is provided for the light source module, the light splitting module, the modulation module, and the sensing module below.

1. Light source module

In a possible implementation, the light source module may include a light emitting component. For example, the light emitting component may include at least two light sources, and one light source may emit light of one color. The light source may be, for example, a laser diode (laser diode, LD), a light emitting diode (light emitting diode, LED), an organic light emitting diode (organic light emitting diode, OLED), or a micro light emitting diode (micro light emitting diode, micro-LED).

For example, the light emitting component may include a first light source, a second light source, and a third light source. The first light source is configured to emit red light, the second light source is configured to emit blue light, and the third light source is configured to emit green light. It may also be understood as that the light emitting component may include an R light source, a G light source, and a B light source. The red light emitted by the first light source, the green light emitted by the third light source, and the blue light emitted by the second light source may be blended to obtain light of different colors. For example, white light may be obtained through blending.

The following describes a possible structure of the light source module by using an example in which the light emitting component includes the first light source, the second light source, and the third light source.

FIG. 4a is a schematic diagram of a structure of a light source module according to this application. The light source module includes a light emitting component. The light emitting component includes a first light source, a second light source, and a third light source. The three light sources are arranged in one column. Light of three colors (RGB) emitted by the three light sources may be blended to form white light. Further, optionally, to improve uniformity of a light beam emitted by each light source, each light source further corresponds to a collimating mirror (for example, a collimating lens or a curved reflective mirror). Specifically, the first light source corresponds to one collimating mirror, the second light source corresponds to one collimating mirror, and the third light source also corresponds to one collimating mirror.

Based on the light source module, light of various colors can be blended without a part of optical elements (for example, a dichromic mirror), to help miniaturize the light source module and miniaturize the optical display apparatus.

Based on the light source module shown in FIG. 4a, a spectrum of light emerged from the light source module may be represented as LED($\lambda$). For details, refer to the following expression of Formula 1:

$$\mathrm{LED}(\lambda)=\mathrm{LED}_B(\lambda)+\mathrm{LED}_G(\lambda)+\mathrm{LED}_R(\lambda) \quad \text{Formula 1}$$

$\mathrm{LED}_B(\lambda)$ represents a spectrum of blue light emitted by the second light source, $\mathrm{LED}_G(\lambda)$ represents a spectrum of green light emitted by the third light source, and $\mathrm{LED}_R(\lambda)$ represents a spectrum of red light emitted by the first light source.

FIG. 4b is a schematic diagram of a structure of another light source module according to this application. The light source module may include a light emitting component, a first dichroic mirror, and a second dichroic mirror. The light emitting component includes a first light source, a second light source, and a third light source. Light of three colors (RGB) is emitted by the three light sources. The first dichroic mirror is configured to reflect blue light from the second light source, and transmit green light from the third light source to the second dichroic mirror. The second dichroic mirror is configured to reflect red light from the first light source, transmit the green light transmitted by the first dichroic mirror, and transmit the blue light reflected by the first dichroic mirror. It may also be understood as that after passing through the second dichroic mirror, the red light from the first light source, the green light from the third light source, and the blue light from the second light source are blended to form light. Further, optionally, to improve uniformity of a light beam emitted by each light source, each light source may also correspond to one collimating mirror. For details, refer to the description in FIG. 4a. Details are not described herein again.

Based on the light source module shown in FIG. 4b, for a spectrum LED($\lambda$) of light emerged from the light source module, refer to the following Formula 2:

$$\mathrm{LED}(\lambda)=\mathrm{LED}_B(\lambda)\times T_1(\lambda)\times T_2(\lambda)+\mathrm{LED}_G(\lambda)\times R_1(\lambda)\times T_2(\lambda)+\mathrm{LED}_R(\lambda)\times R_2(\lambda) \quad \text{Formula 2}$$

$\mathrm{LED}_B(\lambda)$ represents a spectrum of blue light emitted by the second light source, $\mathrm{LED}_G(\lambda)$ represents a spectrum

of green light emitted by the third light source, $LED_R(\lambda)$ represents a spectrum of red light emitted by the first light source, $T_1(\lambda)$ represents a transmission spectrum of the first dichroic mirror, $R_1(\lambda)$ represents a reflection spectrum of the first dichroic mirror, $T_2(\lambda)$ represents a transmission spectrum of the second dichroic mirror, and $R_2(\lambda)$ represents a reflection spectrum of the second dichroic mirror.

It should be noted that positions of the first light source, the second light source, and the third light source in the light source module may also be interchanged. For the structure of the light source module shown in FIG. 4b, if positions of the first light source and the second light source are exchanged, correspondingly, the second dichroic mirror may be replaced with a third dichroic mirror, and the third dichroic mirror may reflect blue light, and transmit red light and green light. The details are not listed one by one herein.

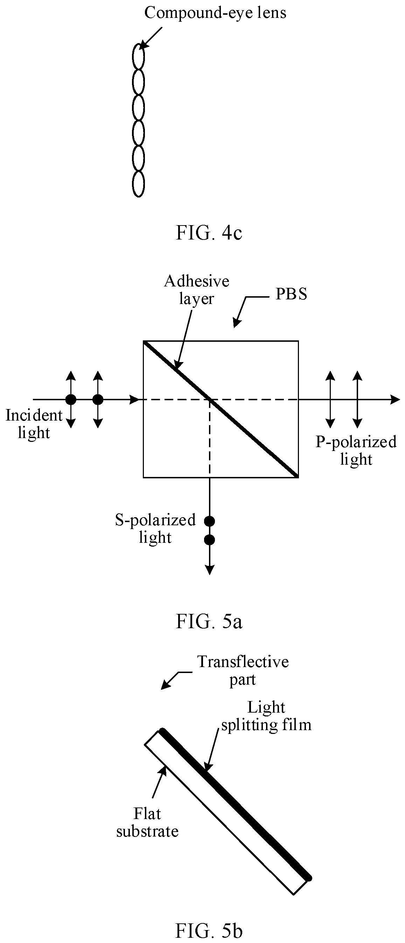

To improve quality of the formed image (for example, brightness uniformity of the image), the light source module may further include a light uniformizing component. Specifically, light formed by blending the light of the various colors is first uniformized by the light uniformizing component, and then is emitted to the light splitting module. The light uniformizing component may be a compound-eye lens (referring to FIG. 4c) formed by a series of (for example, two or more) lenses (or referred to as sub-eyes), to compress an angle of light, so that the light emitted to the light splitting module becomes more uniform.

It should be noted that a quantity of lenses included in the compound-eye lens shown in FIG. 4c is merely an example. In this application, the compound-eye lens may include more lenses than those in FIG. 4c, or may include fewer lenses than those in FIG. 4c. This is not limited in this application. It should be understood that, more sub-eyes included in the compound-eye lens indicate a better light uniformizing effect. In addition, there may be one or more compound-eye lenses. This is not limited in this application either.

2. Light splitting module

In a possible implementation, the light splitting module may split light from the light source module into a first path of light and a second path of light.

The following shows two possible structures of the light splitting module as an example.

In a first structure, the light splitting module may be a polarizing beam splitter.

Based on the first structure, the first path of light and the second path of light have different polarization states. The first path of light may be referred to as first polarized light, and the second path of light may be referred to as second polarized light.

FIG. 5a is a schematic diagram of a light splitting principle of a polarizing beam splitter according to this application. The polarizing beam splitter (polarizing beam splitter, PBS) is an optical device in which one or more layers of thin films may be plated on an oblique surface of a right-angle prism and then bonded using an adhesive layer and that can achieve, based on a property that transmittance of P-polarized light is 1 and transmittance of S-polarized light is less than 1 when light is incident at a Brewster angle, an effect that a P-polarized component is completely transmitted and a majority of an S-polarized component is reflected (at least 90%) after the light passes through the thin film for a plurality of times at the Brewster angle. It may also be understood as that the PBS has transmission and reflection characteristics, and generally, a reflectivity of the PBS for the S-polarized light is greater than 99.5%, and a transmittance of the PBS for the P-polarized light is greater than 91%. For example, the polarizing beam splitter may split incident light (including the P-polarized light and the S-polarized light) into horizontal polarized light (that is, the P-polarized light) and vertical polarized light (that is, the S-polarized light). The P-polarized light completely passes through the polarizing beam splitter, the S-polarized light is reflected at an angle of 45 degrees, and an emergent direction of the S-polarized light and an emergent direction of the P-polarized light form an angle of 90 degrees.

In a possible implementation, the polarizing beam splitter is configured to split light from the light source module into first polarized light and second polarized light, where the first polarized light may be P-polarized light, and correspondingly, the second polarized light is S-polarized light; or the first polarized light is S-polarized light, and the second polarized light is P-polarized light. Further, optionally, the light splitting module further reflects the first polarized light (that is, the S-polarized light) to the sensing module, and transmits the second polarized light (that is, the P-polarized light) to the modulation module; or transmits the first polarized light (that is, the P-polarized light) to the sensing module, and reflects the second polarized light (that is, the S-polarized light) to the modulation module.

In a second structure, the light splitting module is a transflective part.

Based on the second structure, polarization states of the first path of light and the second path of light are the same. For example, both the first path of light and the second path of light may be P-polarized light, or may be S-polarized light, or may be natural light. It should be noted that, if both the first path of light and the second path of light are P-polarized light or S-polarized light, a corresponding polarizer may be added in the light source module or between the light source module and the light splitting module, and the corresponding polarizer may allow the P-polarized light to pass through or allow the S-polarized light to pass through.

In a possible implementation, the transflective part may transmit a part of the light from the light source module to obtain the first path of light, and reflect a part of the light to obtain the second path of light. It may also be understood as that the first path of light is light transmitted from the transflective part, and the second path of light is light reflected from the transflective part. Alternatively, the transflective part may reflect a part of the light from the light source module to obtain the first path of light, and transmit a part of the light to obtain the second path of light. It may also be understood as that the first path of light is light reflected from the transflective part, and the second path of light is light transmitted from the transflective part.

For example, the transflective part may be, for example, a light emitting mirror, and an operating portion of the transflective part may be plated with a plane of a light emitting film (referring to FIG. 5b), to change a proportion of transmitted incident light to reflected incident light. For example, the light emitting film may be plated on a transparent flat substrate to form the transflective part. It should be noted that the transflective part may select a reflectivity and a transmittance of the light emitting film based on a specific requirement. For example, the reflectivity may be higher than 50% and the transmittance is lower than 50%; or the reflectivity may be lower than 50% and the transmittance is lower than 50%; or both the reflectivity and the transmittance are equal to 50%, and this type of a transflective part may also be referred to as a semi-transparent and semi-reflective mirror (semi-transparent and semi-reflective mirror), that is, a transmittance and a reflectivity of the semi-transparent and semi-reflective mirror are 50% respectively. After the incident light passes through the semi-transparent and semi-reflective mirror, intensity of light transmitted and reflected by the semi-transparent and semi-reflective mirror accounts for 50% respectively.

It should be noted that the structures of the light splitting module provided above are merely examples. The first structure may be understood as light splitting based on a polarization state principle, and the second structure may be understood as light splitting based on light intensity (or referred to as energy). Certainly, another structure in which the light from the light source module can be split into the first path of light and the second path of light also falls within the protection scope of this application.

3. Modulation module

In a possible implementation, the modulation module may include an image source (or referred to as an optical data processing (optical data processing, ODP) unit), configured to modulate the received second polarized light, to obtain image light that carries image information. Specifically, the modulation module may perform spatial phase modulation on the second polarized light, to obtain the image light that carries the image information. A polarization state of the image light is the same as a polarization state of the first polarized light. Therefore, after the modulation module reflects the image light to the light splitting module, the image light may be transmitted to a space area via the light splitting module. If the second polarized light is the S-polarized light, the modulation module performs the spatial phase modulation on the second polarized light, and obtained image light is P-polarized light; or if the second polarized light is the P-polarized light, the modulation module performs the spatial phase modulation on the second polarized light, and obtained image light is S-polarized light.

For example, the modulation module may include but is not limited to an LCoS (referring to the foregoing related description) display, a liquid crystal display (liquid crystal display, LCD), a digital light processing (Digital Light Processing, DLP) display, a laser beam scanning (laser beam scanning, LBS) display, and the like.

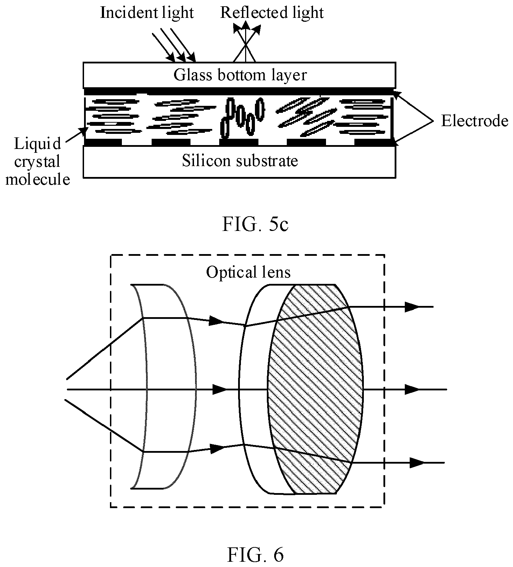

FIG. 5c is a schematic diagram of a structure of a liquid crystal on silicon (liquid crystal on silicon, LCoS) according to this application. A liquid crystal is injected between an upper glass substrate and a lower silicon substrate of the LCoS based on a complementary metal oxide semiconductor (complementary metal oxide semiconductor, COMS) process, to form a liquid crystal layer. An electrode is disposed at a bottom of the liquid crystal layer. An operating principle of the LCoS is as follows: When an external voltage of a pixel of the liquid crystal layer is 0, input S-polarized light passes through the liquid crystal layer, and a polarization direction is not deflected. The S-polarized light is reflected back at the bottom and output. After being reflected by the polarizing beam splitter, the S-polarized light is returned along an original path. When an external voltage is applied to the pixel, the input S-polarized light passes through the liquid crystal layer, and the polarization direction is deflected. The S-polarized light is reflected back at the bottom and P-polarized light is output. The P-polarized light directly passes through the polarizing beam splitter, and is coupled into an optical lens, and the like. Therefore, a direction of a major axis of a liquid crystal molecule may be changed by changing an external voltage or current, to change a refractive index of the LCoS, and therefore change a phase of light passing through the LCoS. It is equivalent to using a phase delay to rotate a polarization state of the light, and cooperating with the polarizing beam splitter to implement light modulation. Based on the LCoS, a small display chip can be implemented, which is conducive to miniaturization of the optical display apparatus.

It should be noted that the foregoing modulation module is merely an example, and another apparatus that can modulate the light from the light source module and generate image light also falls within the protection scope of this application.

In a possible implementation, if the light splitting module is the polarizing beam splitter shown in the first structure, the modulation module may be, for example, an LCoS display or an LCD; or if the light splitting module is the transflective part shown in the second structure, the modulation module may be, for example, an LCoS display, an LCD, a DLP display, or an LBS display.

4. Sensing module

In a possible implementation, the sensing module is configured to detect color information of the first polarized light. For example, the color information may be represented by a spectrum. Specifically, the sensing module may detect a first spectrum of the first polarized light, and convert information about the first spectrum into a first electrical signal. It may also be understood as that the sensing module performs optical-to-electrical conversion on the detected first spectrum of the first polarized light, to obtain the first electrical signal that represents the information about the first spectrum of the first polarized light.

The first spectrum of the first polarized light detected by the sensing module may be represented by $Sensor(\lambda)$. If the first polarized light is P-polarized light, for $Sensor(\lambda)$, refer to the following Formula 3; or if the first polarized light is S-polarized light, for $Sensor(\lambda)$, refer to the following Formula 4:

$$Sensor(\lambda)=LED(\lambda)\times Tp(\lambda) \quad \text{Formula 3}$$

$$Sensor(\lambda)=LED(\lambda)\times Rs(\lambda) \quad \text{Formula 4}$$

$Tp(\lambda)$ is a transmission spectrum of the light splitting module, and $Rs(\lambda)$ represents a reflection spectrum of the light splitting module.

For example, the sensing module may include a detection component. The detection component may include but is not limited to a photon detector (photon detector, PD), a high-speed photodiode, a charge coupled device (charge coupled device, CCD), a complementary metal-oxide-semiconductor (complementary metal-oxide-semiconductor, CMOS) phototransistor, a photodiode, or the like. The sensing module may be, for example, a color sensor. The color sensor may also be referred to as a color recognition sensor or a color sensor, and may distinguish between similar colors accurately.

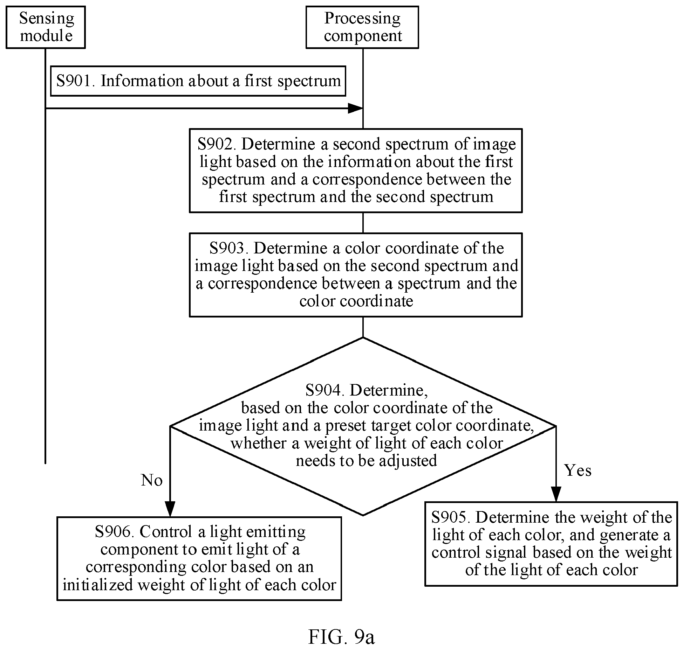

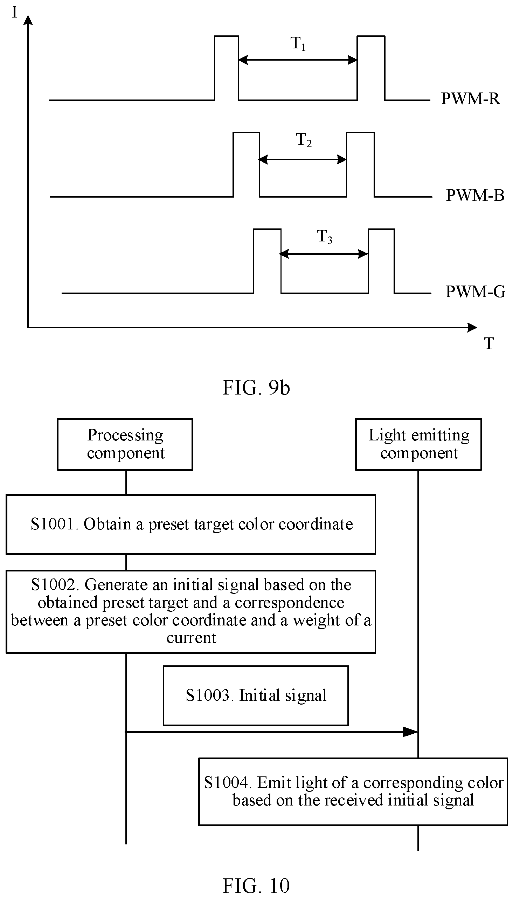

Further, the color cast of the image formed based on the image light may be corrected based on the first electrical signal that is output by the sensing module and that carries the information about the first spectrum. For a specific process, refer to the following descriptions of FIG. 9a and FIG. 10. Details are not described herein.

In this application, the optical display apparatus may further include an optical lens. The optical lens may be configured to project, to the space area, image light output by the modulation module. Specifically, the optical lens may shape and/or uniformize and/or converge the image light output by the modulation module, and propagate shaped and/or uniformized and/or converged image light to the space area. If the optical display apparatus is used in a display system (for example, a projector, an HUD system, a desktop display, or a head-mounted optical display apparatus), the optical lens may propagate the shaped and/or uniformized and/or converged image light to a spatial light amplification module located in the space area (for details, refer to the following related descriptions).

FIG. 6 is a schematic diagram of a structure of an optical lens according to this application. The optical lens may include at least one lens. FIG. 6 is an example in which three lenses are included. It should be noted that a quantity of lenses included in the optical lens is not limited in this application, and may be greater than or less than that in FIG. 6. In addition, a type of the lens is not limited in this application. The lens may also include another lens or a combination of other lenses, for example, a plane-convex lens or a plane-concave lens. In addition, the optical lens may be rotationally symmetric around an optical axis of the optical lens. For example, the lens in the optical lens may be one spherical lens, or may be a combination of a plurality of spherical lenses. Alternatively, the optical lens may be non-rotationally symmetric. For example, the lens in the optical lens may be one aspheric lens, or may be a combination of a plurality of aspheric lenses. The combination of the plurality of spherical lenses and/or aspheric lenses helps improve imaging quality of the optical lens and reduce an aberration of the optical lens.

In a possible implementation, a material of the lens in the optical lens may be an optical material such as glass, a resin, or a crystal. When the material of the lens is the resin, it helps reduce quality of a detection system. When the material of the lens is the glass, it helps further improve imaging quality of the detection system. Further, to effectively suppress temperature drift, the optical lens includes at least one lens made of glass.

Based on the foregoing content, the following provides three specific structures of the foregoing optical display apparatus, to further understand a process in which the foregoing optical display apparatus improves a color cast of a displayed image.

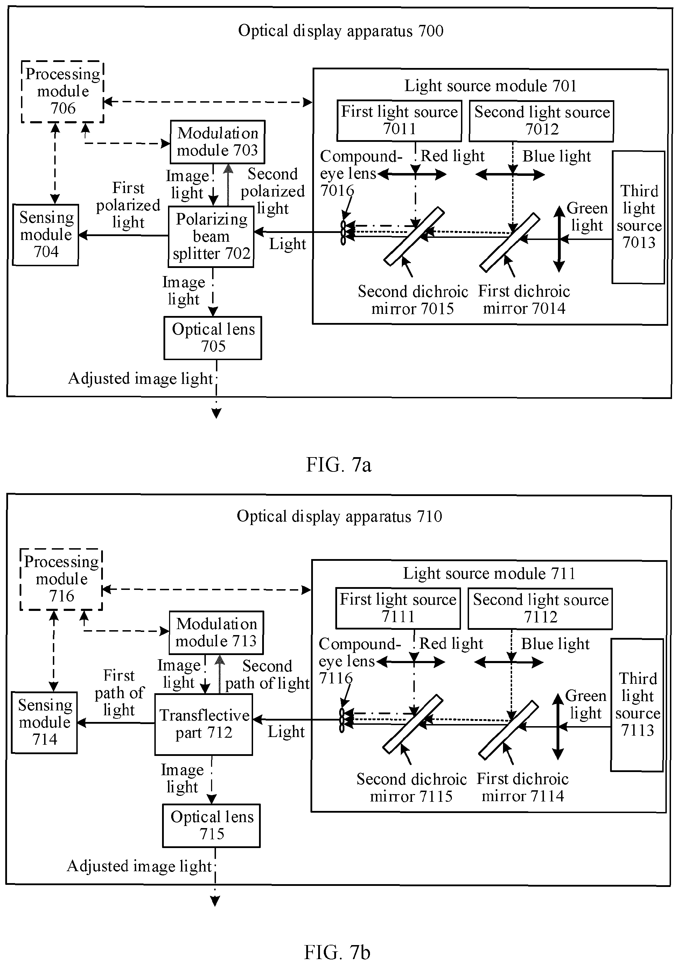

FIG. 7a is a schematic diagram of a structure of another optical display apparatus according to this application. The optical display apparatus 700 may include a light source module 701, a polarizing beam splitter 702, a modulation module 703, a sensing module 704, and an optical lens 705.

Further, optionally, the optical display apparatus may further include a processing module 706. In FIG. 7a, an example in which the light source module 701 includes a first light source 7011, a second light source 7012, a third light source 7013, a first dichroic mirror 7014, a second dichroic mirror 7015, and a compound-eye lens 7016 is used. For more detailed descriptions of other modules, refer to the foregoing related descriptions. Details are not described herein again.

Based on the optical display apparatus, the first light source 7011 emits red light, the second light source 7012 emits blue light, and the third light source 7013 emits green light. Propagation paths of light of various colors are as follows: The green light is transmitted to the second dichroic mirror 7015 via the first dichroic mirror 7014; the blue light is reflected to the second dichroic mirror 7015 via the first dichroic mirror 7014; the green light and the blue light are transmitted via the second dichroic mirror 7015; and the red light is reflected by the second dichroic mirror 7015, and then is combined with the blue light and the green light into white light, and the light is transmitted to the polarizing beam splitter 702 after being uniformized by the compound-eye lens 7016. A spectrum of the light emitted from the light source module may be represented by the foregoing Formula 2.

Further, the light is split into first polarized light and second polarized light via the polarizing beam splitter 702, and the first polarized light is transmitted to the sensing module 704 via the polarizing beam splitter 702. Based on this, for a first spectrum of the first polarized light received by the sensing module 704, refer to Sensor($\lambda$) in the foregoing Formula 3. Tp($\lambda$) in Formula 3 is a transmission spectrum of the polarizing beam splitter. The second polarized light is reflected to the modulation module 703 via the polarizing beam splitter 702. The modulation module 703 performs spatial phase modulation on the second polarized light to obtain image light (a polarization state of the image light is the same as a polarization state of the first polarized light), and reflects the image light to the polarizing beam splitter 702. The image light is transmitted to the optical lens 705 via the polarizing beam splitter 702. Based on this, a second spectrum of the image light projected to a space area may be represented as Display($\lambda$). For details, refer to the following Formula 5:

$$\mathrm{Display`}(\lambda)=\mathrm{LED}(\lambda)\times\mathrm{Rs}(\lambda)\times\mathrm{LCoS}(\lambda)\times\mathrm{Tp}(\lambda)\times\mathrm{A`}(\lambda) \quad \text{Formula 5}$$

Rs($\lambda$) represents a reflection spectrum of a light splitting module (the polarizing beam splitter 702 herein), LCoS($\lambda$) represents a reflection spectrum of the modulation module 703, and A'($\lambda$) represents a transmission spectrum of the optical lens 1004.

Therefore, it may be determined that a difference between the first spectrum detected by the sensing module 704 and the second spectrum that is projected by the optical lens 705 to the space area may be represented by t. For details, refer to the following Formula 6:

$$t = \frac{\mathrm{LED}(\lambda)\times\mathrm{Rs}(\lambda)\times\mathrm{LCoS}(\lambda)\times\mathrm{Tp}(\lambda)\times\mathrm{A`}(\lambda)}{\mathrm{LED}(\lambda)\times\mathrm{Tp}(\lambda)} = \mathrm{Rs}(\lambda) \times \mathrm{LCoS}(\lambda) \times \mathrm{A`}(\lambda) \quad \text{Formula 6}$$

Rs($\lambda$), LCoS($\lambda$), and A'($\lambda$) may be obtained through a test such as a spectrophotometer.

Therefore, it can be learned that a relationship between the first spectrum detected by the sensing module 704 and the second spectrum projected to the space area meets the following Formula 7:

$$\mathrm{Display}(\lambda)=t\times\mathrm{Sensor}(\lambda) \quad \text{Formula 7}$$

It should be noted that FIG. 7a is described by using an example in which the first polarized light is P-polarized light and the second polarized light is S-polarized light. If the first polarized light is the S-polarized light and the second polarized light is the P-polarized light, positions of the modulation module 703 and the sensing module 704 in FIG. 7a may be exchanged. Correspondingly, Rs($\lambda$) in Formula 5 may be replaced with Tp($\lambda$), and Tp($\lambda$) may be replaced with Rs($\lambda$), which is equivalent to that Formula 5 remains unchanged; and Rs($\lambda$) in Formula 6 is replaced with Tp($\lambda$).

FIG. 7b is a schematic diagram of a structure of still another optical display apparatus according to this application. In the optical display apparatus 710, the polarizing beam splitter 702 in FIG. 7a may be replaced with a transflective part 712. Specifically, the optical display apparatus 710 may include a light source module 711, the transflective part 712, a modulation module 713, a sensing module 714, and an optical lens 715. Further, optionally, the optical display apparatus may further include a processing module 716. For more detailed descriptions of the modules, refer to the foregoing related descriptions. Details are not described herein again.

Further, the light is split into a first path of light and a second path of light via the transflective part 712, and the first path of light is partially transmitted to the sensing module 714 via the transflective part 712. Based on this, for a first spectrum of the first path of light received by the sensing module 714, refer to Sensor($\lambda$) in the following Formula 3. Tp($\lambda$) in Formula 3 is a transmission spectrum of the transflective part 712. The second path of light is reflected to the modulation module 713 via the transflective part 712. The modulation module 713 performs spatial phase modulation on the second path of light to obtain image light, and reflects the image light to the transflective part 712. The image light is transmitted to the optical lens 715 via the transflective part 712. Based on this, a second spectrum of the image light projected to a space area may be represented as Display($\lambda$). For details, refer to the foregoing Formula 5. Rs($\lambda$) in Formula 5 herein represents a reflection spectrum of the transflective part 712.

Therefore, it may be determined that a difference between the first spectrum detected by the sensing module 714 and the second spectrum that is projected by the optical lens 715 to the space area may be represented by t. For details, refer to the foregoing Formula 6. Details are not described herein again.

It should be noted that FIG. 7b is described by using an example in which the first path of light is light of a transmission part of the transflective part 712 and the second path of light is light of a reflection part of the transflective part 712. If the first path of light is the light of the reflection part and the second path of light is the light of the transmission part, positions of the modulation module 713 and the sensing module 714 in FIG. 7b may be exchanged. Correspondingly, Rs($\lambda$) in Formula 5 may be replaced with Tp($\lambda$), and Tp($\lambda$) may be replaced with Rs($\lambda$), which is equivalent to that Formula 5 remains unchanged; and Rs($\lambda$) in Formula 6 is replaced with Tp($\lambda$).

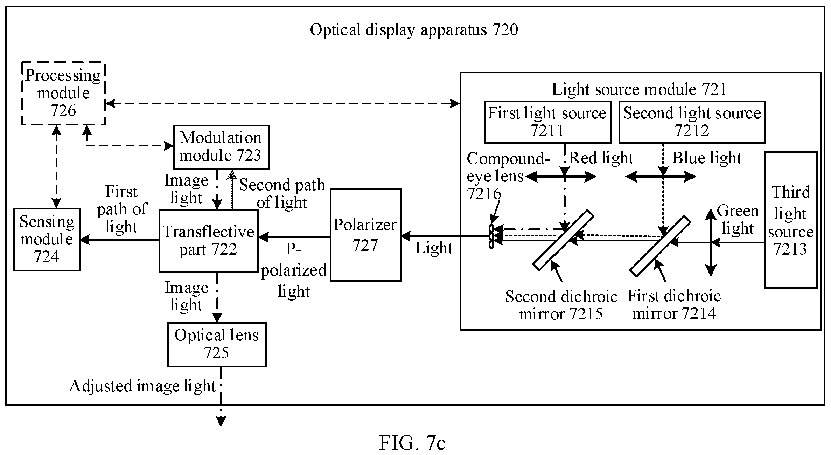

FIG. 7c is a schematic diagram of a structure of yet another optical display apparatus according to this application. A polarizer 727 may be added to the optical display apparatus 720 before (that is, between the compound-eye lens 7116 and the second dichroic mirror 7115) or after the compound-eye lens 7116 in FIG. 7b. It may also be understood as that the light source module 711 may further include the polarizer 727. Alternatively, the polarizer 727 is added between the light source module 711 and the transflective part 712 in FIG. 7b. It may also be understood as that the optical display apparatus 720 may further include the polarizer 727. The polarizer 727 may allow P-polarized light or S-polarized light to pass through. In FIG. 7c, an example in which the polarizer 727 is added between the light source module 721 and the transflective part 722 and the polarizer 727 allows the P-polarized light to pass through is used. Specifically, the optical display apparatus 720 may include a light source module 721, a transflective part 722, a modulation module 723, a sensing module 724, an optical lens 725, and the polarizer 727. Further, optionally, the optical display apparatus may further include a processing module 726. For more detailed descriptions of other modules, refer to the foregoing related descriptions. Details are not described herein again. It should be noted that, a difference between each spectrum of the optical display apparatus based on FIG. 7c and each spectrum of the optical display apparatus based on FIG. 7b lies in that a spectrum that enters the transflective part 722 in FIG. 7c is a spectrum LED($\lambda$)$\times T_3(\lambda)$ emerged from the light source module 721, where $T_3(\lambda)$ is a transmission spectrum of the polarizer 727.

For ease of description of the solution, the following provides descriptions by using an example in which a first path of light is first polarized light, the first polarized light is the P-polarized light; and a second path of light is second polarized light, and the second polarized light is the S-polarized light.

Based on the foregoing relationship between the first spectrum and the second spectrum and the first spectrum of the first polarized light detected by the sensing module, a color cast of an image formed by image light corresponding to the second spectrum is corrected. A specific process may be performed by a processing component. The following provides descriptions by cases based on a module to which the processing component belongs.

Case 1: The processing component belongs to the light source module.

It may also be understood that the light source module may further include the processing component. In other words, the light source module may include a light emitting component and the processing component. Further, optionally, the light source module may further include a collimating mirror and/or a dichroic mirror.

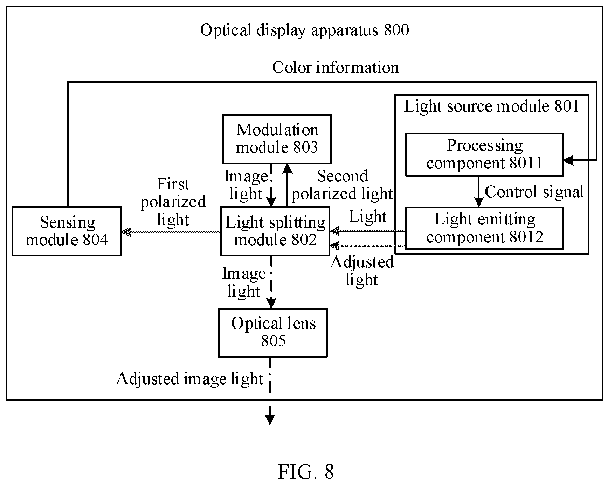

FIG. 8 is a schematic diagram of a structure of another optical display apparatus according to this application. The optical display apparatus may include a light source module 801, a light splitting module 802, a modulation module 803, a sensing module 804, and an optical lens 805. The light source module 801 includes a processing component 8011 and a light emitting component 8012. The sensing module 804 is configured to send the obtained color information to the processing component 8011. The processing component 8011 receives the color information from the sensing module 804, generates a control signal based on the color information, and sends the control signal to the light emitting component 8012. The light emitting component 8012 is configured to adjust weights of light of at least two colors based on the control signal. For a specific process, refer to the following description of FIG. 9a. For more detailed descriptions of the light source module 801, the light splitting module 802, the modulation module 803, the sensing module 804, and the optical lens 805, refer to the foregoing descriptions. Details are not described herein again.

For example, the processing component may be a central processing unit (central processing unit, CPU), a general purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general purpose processor may be a microprocessor, or may be any conventional processor.

FIG. 9a is a schematic flowchart of a color adjustment method according to this application. The method may be performed by the processing component in the foregoing light source module, and the method includes the following steps.

Step 901. A sensing module sends information about a first spectrum to a processing component.

Correspondingly, the processing component receives the information about the first spectrum from the sensing module.

The information about the first spectrum may be carried in a first electrical signal. That is, the sensing module sends the first electrical signal to the processing component, where the first electrical signal includes the information about the first spectrum.

Step 902. The processing component determines a second spectrum of image light based on the information about the first spectrum and a correspondence between the first spectrum and the second spectrum.

The first spectrum may be obtained by detecting a first polarized light via the sensing module, and the second spectrum may be obtained based on the foregoing Formula 7. That is, Display($\lambda$)=t× Sensor($\lambda$), where the second spectrum is represented by Display($\lambda$), and the first spectrum is represented by Sensor($\lambda$).

Step 903. The processing component determines a color coordinate of the image light based on the second spectrum and a correspondence between a spectrum and the color coordinate.

For the correspondence between the spectrum and the color coordinate, refer to the following Formula 8 and Formula 9:

$$\begin{cases} X = \int_{\lambda} k\varphi(\lambda)\bar{x}(\lambda)d\lambda \approx \sum_{400}^{700} k\varphi(\lambda)\bar{x}(\lambda)\Delta\lambda \\ Y = \int_{\lambda} k\varphi(\lambda)\bar{y}(\lambda)d\lambda \approx \sum_{400}^{700} k\varphi(\lambda)\bar{y}(\lambda)\Delta\lambda \quad \text{Formula 8} \\ Z = \int_{\lambda} k\varphi(\lambda)\bar{z}(\lambda)d\lambda \approx \sum_{400}^{700} k\varphi(\lambda)\bar{z}(\lambda)\Delta\lambda \end{cases}$$

$$\begin{cases} x = \frac{X}{X+Y+Z} \\ y = \frac{Y}{X+Y+Z} \end{cases} \quad \text{Formula 9}$$

X, Y, and Z represent spectral tristimulus values of a standard observer, x and y represent a color coordinate, $\varphi(\lambda)$ represents spectral intensity distribution, and an integral interval is a visible light range, may be, for example, [380, 780], and further, may alternatively be [400, 700].

Further, the second spectrum (that is, t× Sensor(k)) represented by the first spectrum is substituted into Formula 8 and Formula 9, to obtain Formula 10 and Formula 11, and the color coordinate of the image light may be obtained based on Formula 10 and Formula 11:

$$\begin{cases} X_{real} = \int_{\lambda} k \times t \times sensor(\lambda) \times \bar{x}(\lambda)d\lambda \approx \sum_{400}^{700} k \times t \times sensor(\lambda) \times \bar{x}(\lambda)\Delta\lambda \\ Y_{real} = \int_{\lambda} k \times t \times sensor(\lambda) \times \bar{y}(\lambda)d\lambda \approx \sum_{400}^{700} k \times t \times sensor(\lambda) \times \bar{y}(\lambda)\Delta\lambda \\ Z_{real} = \int_{\lambda} k \times t \times sensor(\lambda) \times \bar{z}(\lambda)d\lambda \approx \sum_{400}^{700} k \times t \times sensor(\lambda) \times \bar{z}(\lambda)\Delta\lambda \end{cases}$$

Formula 10

$$\begin{cases} x_{real} = \frac{X_{real}}{X_{real}+Y_{real}+Z_{real}} \\ y_{real} = \frac{Y_{real}}{X_{real}+Y_{real}+Z_{real}} \end{cases} \quad \text{Formula 11}$$

It may also be understood as that the color coordinate of the image light is ($x_{real}$, $y_{real}$).

Step 904. The processing component determines, based on the color coordinate of the image light and a preset target color coordinate, whether a weight of light of each color needs to be adjusted; and if the weight needs to be adjusted, perform the following step 905; or if the weight does not need to be adjusted, perform the following step 906.

In a possible implementation, a plurality of groups of preset color coordinates ($x_{target}$, $y_{target}$) may be prestored.

Further, optionally, the optical display apparatus may be of a plurality of operating modes (for example, a snow mode, a rain mode, a sunny mode, a night mode, and a daytime mode). One operating mode may correspond to a group of preset color coordinates, and the group of preset color coordinates may be color coordinates of white light. Refer to Table 1. It should be understood that the preset target color coordinate may be one of the preset color coordinates.

**Table 1 Preset color coordinate**

| Operating mode | Color coordinate |
|---|---|
| Snow mode | A $(x_{target1}, y_{target1})$ |
| Rain mode | B $(x_{target2}, y_{target2})$ |
| Sunny mode | C $(x_{target3}, y_{target3})$ |
| Night mode | D $(x_{target4}, y_{target4})$ |
| Daytime mode | E $(x_{target5}, y_{target5})$ |
| ... | |

It should be noted that, that the correspondence between the operating mode and the preset color coordinate is stored in a form of a table is only an example, and the correspondence may be alternatively stored in another possible form. This is not limited in this application.

Further, optionally, a user may select a group of preset color coordinates (the selected preset color coordinates are preset target color coordinates). The processing component may detect the group of preset target color coordinates selected by the user, compare the color coordinate $(x_{real}, y_{real})$ of the image light with the preset target color coordinate, and determine whether the weight of the light of each color needs to be adjusted. Specifically, $\Delta x = |x_{target} - x_{real}|$, and $\Delta y = |y_{target} - y_{real}|$. If at least one of $\Delta x$ and $\Delta y$ is greater than a threshold, it indicates that the color coordinate of the image light is inconsistent with the preset target color coordinate, and the weight of the light of each color needs to be adjusted. If neither $\Delta x$ nor $\Delta y$ is greater than the threshold, it indicates that the color coordinate of the image light is consistent with the preset target color coordinate, and the weight of the light of each color does not need to be adjusted. The threshold may be, for example, 0.002. Step 905. The processing component determines the weight of the light of each color, and generates a control signal based on the weight of the light of each color.

For example, a light source module is of the structure shown in FIG. 4b. Considering weights of light of various colors, the second spectrum of the image light may be represented by the following $LED(\lambda)_{target}$, where a, m, and n are weights of blue light, green light, and red light respectively:

$$LED(\lambda)_{target} = a \times LED_B(\lambda) \times T_1(\lambda) \times T_2(\lambda) + m \times LED_G(\lambda) \times R_1(\lambda) \times T_2(\lambda) + n \times LED_R(\lambda) \times R_2(\lambda)$$

It may also be understood as that the second spectrum $LED(\lambda)_{target}$ is adjusted by adjusting the weights of the red light, the green light, and the blue light, to adjust the light emitted by the light source, and reduce a color cast of an image formed based on the image light.

In a possible implementation, weights of currents of light sources corresponding to emitted light of various colors may be adjusted, to adjust weights of the light of the various colors. It may also be understood as that the control signal includes a weight of a current of each light source. For example, a light emitting component includes a first light source, a second light source, and a third light source, and the processing component may adjust the weight a: m: n of the light of each color by adjusting $I_1: I_2: I_3$.

Further, optionally, the processing component may adjust the weight of the current based on a color processing algorithm, where the color processing algorithm may be preset. For example, weights of currents input to one or more light sources are increased by a%, and weights of currents of the remaining light sources are decreased by a%, where a% may be 0.5%, 0.2%, 1%, or the like. It should be noted that a sum of weights of currents of light sources corresponding to the light of the various colors is 100%.

It should be understood that each light source input to the light source module has an initial current weight. The initial current weight may be prestored, or may be determined in an initialization process. For an initialization process, refer to the following description in FIG. 10.

For example, a current input to the light source module is a PWM current, and the light source module includes an R light source, a G light source, and a B light source. Refer to FIG. 9b. Duty cycles of PWMs that are input to the R light source, the G light source, and the B light source may be adjusted. Specifically, an interval between two adjacent pulses may be changed (that is, values of $T_1$, $T_2$, and $T_3$ are adjusted). For another example, current values (I) that are input to the R light source, the G light source, and the B light source may be changed. In this way, the weights of the currents input to the R light source, the G light source, and the B light source can be adjusted. Step 906. The processing component controls the light emitting component to emit light of a corresponding color based on initialized weights of light of various colors.

It can be learned from the foregoing step 901 to step 906 that, a color cast of an image formed by image light corresponding to the second spectrum is corrected based on a relationship between the first spectrum and the second spectrum and the first spectrum of the first polarized light detected by the sensing module, to help reduce a color cast of an image displayed by the optical display apparatus. That is, the second polarized light is multiplexed, and the color information detected by the sensing module is compared with the preset target color coordinate, to implement color point adjustment, and thus implement color calibration.

FIG. 10 is a schematic flowchart of a method for adjusting a color initialization process of an image according to this application. The method may be performed by the processing component in the foregoing light source module. For ease of description of the solution, the following uses an example in which the light source module includes the first light source, the second light source, and the third light source for description.

The method includes the following steps.

Step 1001. A processing component obtains a preset target color coordinate.

In a possible implementation, a group of preset color coordinates selected by a user may be detected, and the selected preset color coordinates are preset target color coordinates.

Step 1002. The processing component generates an initial signal based on the obtained preset target and a correspondence between the preset color coordinate and a weight of a current.

The initial signal includes the weight of the current input to each light source.

In a possible implementation, the correspondence between the preset color coordinate and the weight of the current may be represented in the following Table 2. A weight of a current corresponding to the preset target color coordinate may be determined based on the preset target color coordinate and Table 2. For example, if the preset target color coordinate is A ($x_{target1}$, $y_{target1}$), it may be determined that a corresponding current weight ratio is $I_{11}$: $I_{11}$: $I_{13}$; and weights of currents that are included in the initial signal are $I_{11}$: $I_{12}$: $I_{13}$.

**Table 2 Correspondence between a preset target color coordinate, a weight of a current, and a brightness**

| Color coordinate | Weight of a current | Brightness |
|---|---|---|
| A ($x_{target1}$, $y_{target1}$) | $I_{11}$: $I_{12}$: $I_{13}$ | $B_1$ |
| B ($x_{target2}$, $y_{target2}$) | $I_{21}$: $I_{22}$: $I_{23}$ | $B_2$ |
| … | … | |

It should be noted that, that the correspondence between the preset color coordinate, the weight of the current, and the brightness is represented in a form of a table is only an example, and the correspondence may be alternatively represented in another possible form. This is not limited in this application.

It should be further noted that Table 1 and Table 2 may be two independent tables, or may be combined. This is not limited in this application. In addition, Table 1 and Table 2 may be stored in a memory or a register, and the processing component may obtain data in Table 1 and Table 2 by calling the memory or the register. For the memory or the register, refer to the following related descriptions. Details are not described herein again.

Step 1003. The processing component sends the initial signal to a light emitting component. Accordingly, the light emitting component may receive the initial signal from the processing component.

For example, the light emitting component includes a first light source, a second light source, and a third light source.

Step 1004. The light emitting component may emit light of a corresponding color based on the received initial signal.

It should be noted that the processes in FIG. 9a and FIG. 10 are also applicable to brightness adjustment. Specifically, the weight of the current may be replaced with the brightness, and details are not described herein again.

Case 2: The processing component belongs to the sensing module.

It may also be understood that the sensing module may further include the processing component. In other words, the sensing module may include a detection component and the processing component.

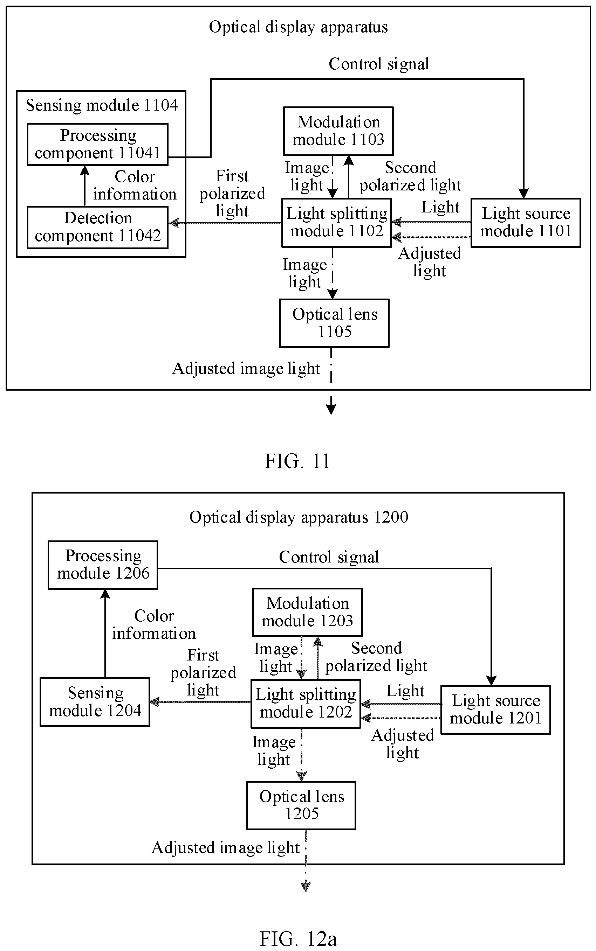

FIG. 11 is a schematic diagram of a structure of another optical display apparatus according to this application. The optical display apparatus may include a light source module 1101, a light splitting module 1102, a modulation module 1103, and a sensing module 1104. The sensing module 1104 includes a processing component 11041 and a detection component 11042. The detection component 11042 may be configured to detect color information of a first polarized light, and send the color information to the processing component 11041. The processing component 11041 is configured to generate a control signal based on the color information, and send the control signal to the light source module 1101. Correspondingly, the light source module 1101 is configured to adjust a weight of a current of each color in light of at least two colors based on the control signal. For more detailed descriptions of the light source module 801, the light splitting module 802, the modulation module 803, the sensing module 804, and the optical lens 805, refer to the foregoing descriptions. Details are not described herein again.

For a process in which the processing component in the sensing module generates the control signal, refer to the descriptions of step 902 to step 905 in FIG. 9a. Details are not described herein again.

Case 3: The processing component is independent of the sensing module and the light source module. The processing component may also be referred to as a processing module.

It may also be understood that the optical display apparatus may further include the processing module.

FIG. 12a is a schematic diagram of a structure of still another optical display apparatus according to this application. The optical display apparatus 1200 may include a light source module 1201, a light splitting module 1202, a modulation module 1203, a sensing module 1204, an optical lens 1205, and a processing module 1206. The sensing module 1204 is configured to obtain color information of a first polarized light, and send the color information to the processing module 1206. The processing module 1206 is configured to generate a control signal based on the color information, and send the control signal to the light source module 1201. The light source module 1201 is further configured to adjust weights of light of at least two colors based on the control signal.

For more detailed descriptions of the light source module 1201, the light splitting module 1202, the modulation module 1203, the sensing module 1204, and the optical lens 1205, refer to the foregoing descriptions. Details are not described herein again. For a process in which the processing module generates the control signal, refer to the descriptions of step 902 to step 905 in FIG. 9a. Details are not described herein again.

It should be noted that the processes in FIG. 9a and FIG. 10 may alternatively be performed by another module or structure that may have a processing function, for example, an image processing control board of an ODP or an in-vehicle controller. The in-vehicle controller may be, for example, an independent controller, a domain controller in a vehicle, or an electronic control unit (electronic control unit, ECU) in a vehicle. This is not limited in this application.

Based on the foregoing optical display apparatus, without increasing complexity of an optical system, the sensing module is added, so that when an environment (for example, a temperature) changes, a weight of a current of a light emitting component (for example, a light source) in the light source module can be adjusted through feedback, so that a weight of light of each color of combined light can be changed, and it can be ensured that the optical display apparatus displays the light in a constant color range, to help reduce a color cast of an image displayed by the optical display apparatus.

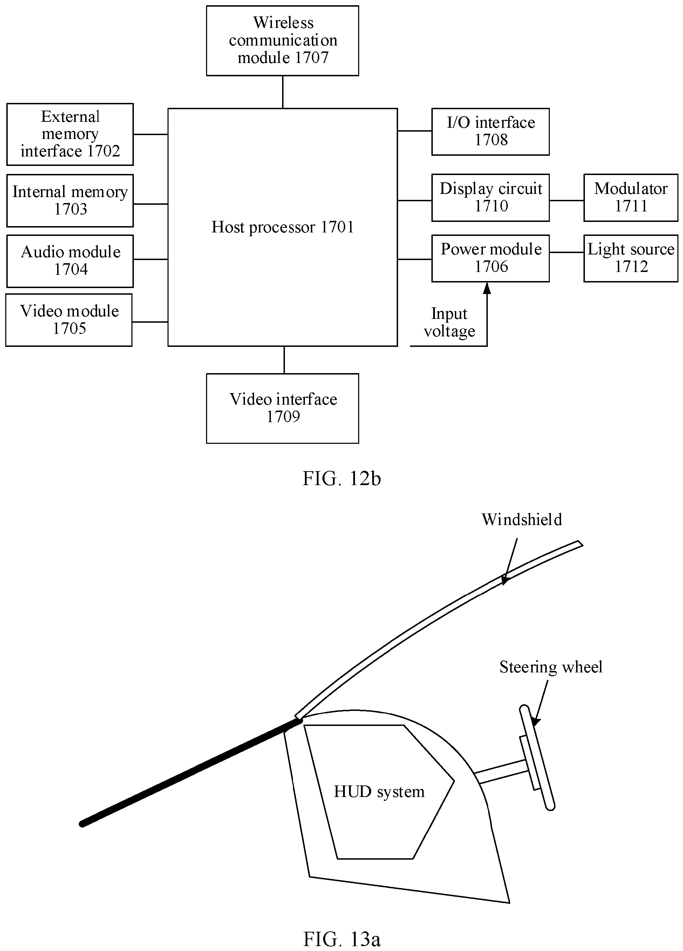

FIG. 12b is a schematic diagram of a circuit of an optical display apparatus according to this application. The circuit in the optical display apparatus mainly includes a host processor (host CPU) 1701, an external memory interface 1702, an internal memory 1703, an audio module 1704, a video module 1705, a power module 1706, a wireless communication module 1707, an I/O interface 1708, a video interface 1709, a display circuit 1710, a modulator 1711, and the like. The host processor 1701 and peripheral elements thereof, such as the external memory interface 1702, the internal memory 1703, the audio module 1704, the video module 1705, the power module 1706, the wireless communication module 1707, the I/O interface 1708, the video interface 1709, and the display circuit 1710, may be connected through a bus. The host processor 1701 may be referred to as a front-end processor.

In addition, the schematic diagram of a circuit in embodiments of this application does not constitute a specific limitation on the optical display apparatus. In some other embodiments of this application, the optical display apparatus may include more or fewer components than those shown in the figure, or combine some components, or split some components, or have different component arrangements. The components shown in the figure may be implemented by hardware, software, or a combination of software and hardware.

The host processor 1701 includes one or more processing units. For example, the host processor 1701 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, and/or a neural-network processing unit (Neural-Network Processing Unit, NPU). Different processing units may be independent components, or may be integrated into one or more processors.

A memory may be further disposed in the host processor 1701, and is configured to store instructions and data. In some embodiments, the memory in the host processor 1701 is a cache. The memory may store instructions or data that are/is just used or cyclically used by the host processor 1701. If the host processor 1701 needs to use the instructions or the data again, the instructions or the data may be directly called from the memory. Repeated access is avoided, and a waiting time of the host processor 1701 is reduced, thereby improving efficiency of the optical display apparatus. The host processor 1701 may execute the stored instructions, to perform the foregoing color adjustment method.

In some embodiments, the optical display apparatus may further include a plurality of input/output (Input/Output, I/O) interfaces 1708 connected to the host processor 1701. The interface 1708 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1708 may be connected to a device such as a mouse, a touchpad, a keyboard, a camera, a speaker/loudspeaker, or a microphone, or may be connected to a physical button (such as a volume button, a brightness adjustment button, or a power-on/off button) on the optical display apparatus.

The external memory interface 1702 may be configured to be connected to an external memory card, for example, a Micro SD card, to extend a storage capability of the optical display apparatus. The external memory card communicates with the host processor 1701 through the external memory interface 1702, to implement a data storage function.

The internal memory 1703 may be configured to store computer-executable program code. The executable program code includes instructions. The internal memory 1703 may include a program storage area and a data storage area. The program storage area may store an operating system, an application required by at least one function (such as a call function or a time setting function), and the like. The data storage area may store data (such as a phone book and world time) created in a process of using the optical display apparatus, and the like. In addition, the internal memory 1703 may include a high-speed random access memory, and may further include a non-volatile memory, for example, at least one magnetic disk storage device, a flash storage device, a universal flash storage (Universal Flash Storage, UFS), or the like. The host processor 1701 performs various functional applications of the optical display apparatus and data processing by running the instructions stored in the internal memory 1703 and/or the instructions stored in the memory disposed in the host processor 1701.

The optical display apparatus may implement an audio function via the audio module 1704, the application processor, and the like. For example, music playback and calls.

The audio module 1704 is configured to convert digital audio information into an analog audio signal output, and is also configured to convert an analog audio input into a digital audio signal. The audio module 1704 may be further configured to encode and decode an audio signal, for example, perform voice playing or recording. In some embodiments, the audio module 1704 may be disposed in the host processor 1701, or some functional modules of the audio module 1704 are disposed in the host processor 1701.

The video interface 1709 may receive audio and video signals input from the outside, and may be specifically a high definition multimedia interface (High Definition Multimedia Interface, HDMI), a digital visual interface (Digital Visual Interface, DVI), a video graphics array (Video Graphics Array, VGA), a display port (Display port, DP), and the like. The video interface 1709 may further output a video to the outside. When the optical display apparatus is used for head up display, the video interface 1709 may receive a speed signal and a signal of a quantity of electricity that are input by a peripheral device, and may further receive an AR video signal that is input externally. When the optical display apparatus is used as a projector, the video interface 1709 may receive a video signal input by an external computer or a terminal device.

The video module 1705 may decode a video input by the video interface 1709, for example, perform H.264 decoding. The video module may further encode a video collected by the optical display apparatus, for example, perform H.264 encoding on a video collected by an external camera. In addition, the host processor 1701 may also decode the video input by the video interface 1709, and then output a decoded image signal to the display circuit 1710.

The display circuit 1710 and a modulator 1711 are configured to display a corresponding image. In this embodiment, the video interface 1709 receives a video source signal that is input eternally, the video module 1705 performs decoding and/or digitization processing and outputs one or more image signals to the display circuit 1710. The display circuit 1710 drives, based on the input image signal, the modulator 1711 to image the incident polarized light, to output at least two paths of image light. In addition, the host processor 1701 may also output one or more image signals to the display circuit 1710.

In this embodiment, the display circuit 1710 and the modulator 1711 belong to electronic elements in the modulation unit, and the display circuit 1710 may be referred to as a drive circuit.

The power module 1706 is configured to supply power to the host processor 1701 and a light source 1712 based on input power (for example, a direct current). The power module 1706 may include a rechargeable battery, and the rechargeable battery may supply power to the host processor 1701 and the light source 1712. Light emitted by the light source 1712 may be transmitted to the modulator 1711 for imaging, to form an image optical signal.

The wireless communication module 1707 may enable the optical display apparatus to perform wireless communication with the outside. The wireless communication module may provide wireless communication solutions such as a wireless local area network (Wireless Local Area Network, WLAN) (such as a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication technology (Near Field Communication, NFC), and an infrared technology (Infrared, IR). The wireless communication module 1707 may be one or more components integrating at least one communication processor module. The wireless communication module 1707 receives an electromagnetic wave through an antenna, performs frequency modulation and filtering processing on an electromagnetic wave signal, and sends a processed signal to the host processor 1701. The wireless communication module 1707 may further receive a to-be-sent signal from the host processor 1701, perform frequency modulation and amplification on the to-be-sent signal, and convert the to-be-sent signal into an electromagnetic wave through the antenna and radiate the electromagnetic wave.

In addition, video data decoded by the video module 1705 may also be received in a wireless manner via the wireless communication module 1707 or read from the external memory, in addition to being input by the video interface 1709. For example, the optical display apparatus may receive the video data from the terminal device or an in-vehicle infotainment system via the wireless local area network in the vehicle, and the optical display apparatus may further read audio and video data stored in the external memory.

Based on the structure and function principle of the optical display apparatus described above, this application further provides a display system. The display system includes the optical display apparatus shown in any one of the foregoing embodiments and a spatial light amplification module located in a space area. The spatial light amplification module is configured to amplify an image corresponding to image light from the optical display apparatus. For example, the display system may include but is not limited to a projector, an HUD system, a desktop display, or the like.

In a possible implementation, the spatial light amplification module includes any one or a combination of at least one curved reflective mirror and at least one cylindrical mirror. The cylindrical mirror may have a curvature in one dimension, so that one-dimensional shaping can be implemented. It may also be understood that light is diverged or converged in one dimension, and the light is reflected in another dimension. The cylindrical mirror may be, for example, a plane convex cylindrical mirror or a plane concave cylindrical mirror.

Based on the structure and function principle of the display system described above, this application may further provide a vehicle. FIG. 13a is a schematic diagram of a partial structure of a vehicle according to this application. The vehicle may include the display system and the windshield in any one of the foregoing embodiments, where the windshield is configured to reflect and image the image light from the display system.

For example, the vehicle is a vehicle, the display system is an HUD system, and the windshield may be configured to reflect the image light from the display system to an eye movement range of the vehicle (referring to FIG. 2).

When the optical display apparatus in any one of the foregoing embodiments is applied to the vehicle, a second spectrum may be represented by the following Formula 12:

$$Display(\lambda)=LED(\lambda)\times Rs(\lambda)\times LCoS(\lambda)\times Tp(\lambda)\times A(\lambda) \qquad \text{Formula 12}$$

$A(\lambda)$ represents a sum of spectrums of all optical elements that are passed through from an optical lens to human eyes. The optical elements that are passed through include but are not limited to the optical lens, a spatial light amplification module, the windshield, and the like.

In a possible implementation, the eye movement range may also be referred to as an eyebox (eyebox), and eyes of a driver usually need to be within the eye movement range. Refer to FIG. 2. It should be understood that, if glasses are aligned with the center of the eyebox, a complete and clear virtual image may be seen. When the eyes move left and right, or up and down, at a point in each direction, the seen virtual image may be distorted and color rendering may be incorrect, or even the seen virtual image is not displayed. Due to different heights of drivers, the eye movement range is generally 130 mm $\times$ 50 mm. That is, there is a movement range of about $\pm 50$ mm in the vertical direction and a movement range of about $\pm 130$ mm in the horizontal direction.

To prevent the entire windshield from being broken after the windshield is hit, the windshield generally includes two layers of glass and a layer of polyvinyl butyral (polyvinyl butyral, PVB) material sandwiched between the two layers of glass. A refractive index of the PVB material is close to a refractive index of the glass. For description of the solution, the windshield may be simplified into plane glass with a specific thickness (generally 4 to 5 mm). In a possible implementation, the windshield includes a wedge-shaped windshield or a plane windshield.

It should be understood that the structure of the vehicle shown in FIG. 13a is merely an example. The vehicle may further include other devices, for example, a steering wheel, a memory, and a wireless communication apparatus.

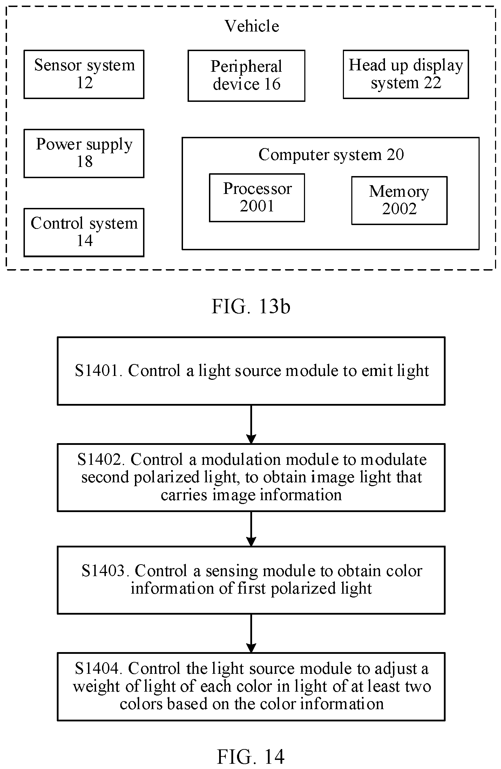

FIG. 13b is a schematic diagram of a possible functional framework of a vehicle according to this application. In the example, an example in which a display system is a head up display system is used for description. The functional framework of the vehicle may include various subsystems, for example, a sensor system 12, a control system 14, one or more peripheral devices 16 (one is used as an example in the figure), a power supply 18, a computer system 20, and a head up display system 22. Optionally, the vehicle may further include another functional system, for example, an engine system that provides power for the vehicle. This is not limited herein in this application.

The sensor system 12 may include several detection apparatuses. The detection apparatuses can sense measured information, and convert the sensed information into an electrical signal or other information in a required form based on a specific rule for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element for automatic detection, or the like. This is not limited in this application.

The control system 14 may include several elements, such as a steering unit, a braking unit, a lighting system, an automatic driving system, a map navigation system, a network timing system, and an obstacle avoidance system, as shown. Optionally, the control system 14 may further include elements such as a throttle controller and an engine controller that are configured to control a driving speed of the vehicle. This is not limited in this application.

The peripheral device 16 may include several elements, for example, a communication system, a touchscreen, a user interface, a microphone, and a speaker in the figure. The communication system is configured to implement network communication between the vehicle and another device other than the vehicle. In an actual application, the communication system may implement network communication between the vehicle and another device by using a wireless communication technology or a wired communication technology. The wired communication technology may mean using a network cable, an optical fiber, or the like to perform communication between the vehicle and the another device.

The power supply 18 represents a system used to provide power or energy for the vehicle, and may include but is not limited to a rechargeable lithium battery and lead-acid battery. In actual application, one or more battery modules in the power supply are configured to provide electrical energy or energy for starting the vehicle. A type and a material of the power supply are not limited in this application.

Several functions of the vehicle are controlled and implemented by the computer system 20. The computer system 20 may include one or more processors 2001 (one processor is shown as an example in the figure) and a memory 2002 (which may also be referred to as a storage apparatus). In an actual application, the memory 2002 is also inside the computer system 20, or may be outside the computer system 20, for example, used as a cache in the vehicle. This is not limited in this application.

The processor 2001 may include one or more general purpose processors, for example, a graphic processing unit (graphic processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the schematic diagram of the functional framework of the vehicle shown in FIG. 13b. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the schematic diagram of the functional framework of the vehicle, such as the sensor and the GPS in the sensor system. For example, the computer system 20 may control a driving direction, the driving speed, or the like of the vehicle based on data input of the sensor system 12. This is not limited in this application.

The head up display system 22 may include several elements, for example, front-shield glass, the controller, and the head up display shown in the figure. The controller 222 is configured to generate an image (for example, generate an image including a vehicle status such as a vehicle speed and a power/fuel amount, and an image of augmented reality AR content) based on user instructions, and send the image to the head up display for display. The head up display may include an image generation unit and a reflective mirror combination. The front-shield glass is configured to cooperate with the head up display to implement an optical path of the head up display system, to enable a target image to be presented in front of a driver. It should be noted that functions of some elements in the head up display system may alternatively be implemented by another subsystem of the vehicle. For example, the controller may alternatively be an element in the control system.

FIG. 13b in this application shows that four subsystems are included. The sensor system 12, the control system 14, the computer system 20, and the head up display system 22 are merely examples, and do not constitute a limitation. In an actual application, the vehicle may combine several elements in the vehicle based on different functions, to obtain subsystems with corresponding different functions. In actual application, the vehicle may include more or fewer systems or elements. This is not limited in this application.

For example, the vehicle may be an intelligent vehicle, an electric vehicle, a digital vehicle, a car, a truck, a motorcycle, a bus, a ship, an airplane, a helicopter, a lawn mower, a recreational vehicle, a playground vehicle, a construction device, a tram, a golf cart, a train, a trolley, or the like. This is not limited in this application.

Based on the foregoing content and the same concept, this application provides a color adjustment method. Refer to the description in FIG. 14. The color adjustment method may be applied to the optical display apparatus shown in any one of embodiments in FIG. 3 to FIG. 12a. It may also be understood that the color adjustment method may be implemented based on the optical display apparatus shown in any one of embodiments in FIG. 3 to FIG. 12a. Alternatively, the color adjustment may be applied to the display system shown in any one of the foregoing embodiments, or may be applied to the vehicle shown in any one of the foregoing embodiments.

The color adjustment method may be performed by a control apparatus. The control apparatus may belong to the optical display apparatus (for example, a host processor in the optical display apparatus), or may be a control apparatus independent of the optical display apparatus, for example, a chip or a chip system. When the control apparatus belongs to the vehicle, the control apparatus may be a domain processor in the vehicle, or may be an electronic control unit (electronic control unit, ECU) in the vehicle, or may be a processing component in a light source module, or may be a processing component in a sensing module, or the like.

The color adjustment method includes the following steps.

Step 1401. Control a light source module to emit light.

The light is combined by light of at least two colors. In a possible implementation, weights of light of various colors that are input to the light source module may be controlled by controlling weights of currents of light sources corresponding to the light of the various colors. For a specific process, refer to the foregoing description of the light source module. Details are not described herein again. Further, the light from the light source module may be split into first polarized light and second polarized light by a light splitting module. For details, refer to the foregoing description of the light splitting module. Details are not described herein again.

Step 1402. Control a modulation module to modulate the second polarized light, to obtain image light that carries image information.

For step 1402, refer to the foregoing description of the modulation module. Details are not described herein again.

Step 1403. Control a sensing module to obtain color information of the first polarized light.

For step 1403, refer to the foregoing description of the sensing module. Details are not described herein again.

Step 1404. Control the light source module to adjust weights of the light of the at least two colors based on the color information.

For step 1404, refer to the descriptions of FIG. 9a and FIG. 10. Details are not described herein again.

In a possible implementation, a corresponding control signal may be sent to each module, to control each module.

It can be learned from the foregoing step 1401 to step 1404 that, the first polarized light detected by the sensing module is used as color calibration of the light emitted by the light source module. Further, the weights of the light of the at least two colors of the combined light are adjusted based on the color information detected by the sensing module through the first polarized light, to implement color correction of the image light.

It may be understood that, to implement the functions in the foregoing method embodiments, the control apparatus includes a corresponding hardware structure and/or software module for performing each function. A person skilled in the art should be easily aware that, with reference with modules and method steps in the examples described in embodiments disclosed in this application, this application can be implemented by hardware or a combination of hardware and computer software. Whether a function is performed by using hardware or hardware driven by computer software depends on particular application scenarios and design constraints of the technical solutions.

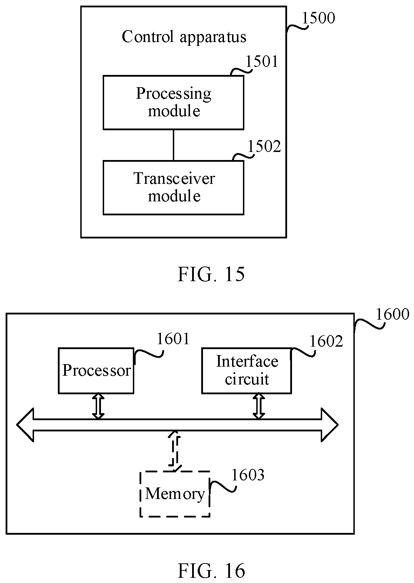

Based on the foregoing content and the same concept, FIG. 15 and FIG. 16 are schematic diagrams of structures of possible control apparatuses according to this application. The control apparatuses may be configured to implement the functions in FIG. 9a, FIG. 10, or FIG. 14 in the foregoing method embodiments, and therefore may also implement beneficial effects of the foregoing method embodiments.

As shown in FIG. 15, the control apparatus 1500 includes a processing module 1501, and may further include a transceiver module 1502. The control apparatus 1500 is configured to implement the functions of the method embodiment shown in FIG. 14.

When the control apparatus 1500 is configured to implement the functions of the method embodiment shown in FIG. 14, the processing module 1501 is configured to control a light source module to emit light, control a modulation module to modulate second polarized light to obtain image light that carries image information, control a sensing module to obtain color information of first polarized light, and control the light source module to adjust weights of light of at least two colors based on the color information. Further, optionally, the transceiver module 1502 is configured to send a control signal to the light source module, the modulation module, the sensing module, and the like.

It should be understood that the processing module 1501 in embodiments of this application may be implemented by a processor or a processor-related circuit component, and the transceiver module 1502 may be implemented by a related circuit component such as an interface circuit. Based on the foregoing content and the same concept, as shown in FIG. 16, this application further provides a control apparatus 1600. The control apparatus 1600 may include a processor 1601, and further, optionally, may further include an interface circuit 1602. The processor 1601 and the interface circuit 1602 are coupled to each other. It may be understood that the interface circuit 1602 may be an input/output interface. Optionally, the control apparatus 1600 may further include a memory 1603, configured to store a computer program, instructions, or the like executed by the processor 1601.

When the control apparatus 1600 is configured to implement the method shown in FIG. 15, the processor 1601 is configured to perform the function of the processing module 1501, and the interface circuit 1602 is configured to perform the function of the transceiver module 1502. Based on the foregoing content and the same concept, this application provides a chip. The chip may include a processor and an interface circuit. Further, optionally, the chip may further include a memory. The processor is configured to execute a computer program or instructions stored in the memory, to enable the chip to perform the method in any possible implementation in FIG. 14. The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an optical display apparatus, a display system, or a vehicle. Certainly, the processor and the storage medium may alternatively exist in the optical display apparatus, the display system, or the vehicle as discrete modules.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, or other programmable apparatuses. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, may be an optical medium such as a digital video disc (digital video disc, DVD), or may be a semiconductor medium such as a solid-state drive (solid state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "uniformity" does not mean absolute uniformity, and an engineering error may be allowed. "Vertical" does not mean absolute verticality, and an engineering error may be allowed. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In a formula in this application, the character "/" indicates a "division" relationship between the associated objects. In this application, a symbol "(a, b)" represents an open interval with a range greater than a and less than b, "[a, b]" represents a closed interval with a range greater than or equal to a and less than or equal to b, "(a, b]" represents a half-open and half-closed interval with a range greater than a and less than or equal to b, and "(a, b]" represents a half-open and half-closed interval with a range greater than a and less than or equal to b. In addition, in this application, the term "example" is used to represent an example, an illustration, or a description. Any embodiment or design scheme described as an "example" in this application should not be explained as being more preferred or having more advantages than another embodiment or design scheme. Alternatively, it may be understood that the term "example" is used to present a concept in a specific manner, and does not constitute a limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and other similar expressions are intended to distinguish between similar objects but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

**Claims**

1. An optical display apparatus, comprising a light source module, a light splitting module, a modulation module, and a sensing module, wherein

   the light source module is configured to emit light, wherein the light is combined by light of at least two colors;
   the light splitting module is configured to split the light from the light source module into a first path of light and a second path of light, propagate the first path of light to the sensing module, and propagate the second path of light to the modulation module;
   the modulation module is configured to modulate the second path of light, to obtain image light that carries image information; and
   the sensing module is configured to obtain color information of the first path of light, wherein the color information is used by the light source module to adjust weights of the light of the at least two colors.

2. The apparatus according to claim 1, wherein the light source module comprises a processing component and a light emitting component, wherein

   the processing component is configured to receive the color information from the sensing module, generate a control signal based on the color information, and send the control signal to the light emitting component, wherein the control signal is for adjusting the weights of the light of the at least two colors; and
   the light emitting component is configured to adjust the weights of the light of the at least two colors based on the control signal.

3. The apparatus according to claim 2, wherein the processing component is specifically configured to:

   determine a color coordinate of the image light based on the color information; and
   generate the control signal if a difference between the color coordinate of the image light and a preset target color coordinate is greater than a threshold.

4. The apparatus according to any one of claims 1 to 3, wherein the light splitting module comprises a polarizing beam splitter, wherein

   the first path of light is P-polarized light, and the second path of light is S-polarized light; or
   the first path of light is S-polarized light, and the second path of light is P-polarized light.

5. The apparatus according to any one of claims 1 to 3, wherein the light splitting module comprises a transflective part, wherein

   the first path of light is light transmitted from the transflective part, and the second path of light is light reflected from the transflective part; or
   the first path of light is light reflected from the transflective part, and the second path of light is light transmitted from the transflective part.

6. The apparatus according to any one of claims 1 to 5, wherein the light emitting component comprises a first light source configured to emit red light, a second light source configured to emit blue light, and a third light source configured to emit green light.

7. The apparatus according to claim 6, wherein the light source module further comprises a first dichroic mirror and a second dichroic mirror, wherein

the first dichroic mirror is configured to reflect the blue light from the second light source, and transmit the green light from the third light source; and
the second dichroic mirror is configured to reflect the red light from the first light source, transmit the green light transmitted by the first dichroic mirror, and transmit the blue light reflected by the first dichroic mirror.

8. The apparatus according to any one of claims 1 to 7, wherein the optical display apparatus further comprises an optical lens, wherein
the optical lens is configured to project, to a space area, the image light output by the modulation module.

9. A display system, comprising the optical display apparatus according to any one of claims 1 to 8 and a spatial light amplification module located in a space area, wherein
the spatial light amplification module is configured to amplify an image corresponding to an image light from the optical display apparatus.

10. The system according to claim 9, wherein the spatial light amplification module comprises any one or any combination of the following:

at least one curved reflective mirror; and
at least one cylindrical mirror.

11. A vehicle, comprising the display system according to claim 9 or 10 and a windshield, wherein
the windshield is configured to reflect and image an image light from the display system.

12. A color adjustment method, applied to an optical display apparatus, wherein the optical display apparatus comprises a light source module, a light splitting module, a modulation module, and a sensing module; and
the method comprises:

controlling the light source module to emit light, wherein the light is combined by light of at least two colors, and the light is split into a first path of light and a second path of light through the light splitting module;
controlling the modulation module to modulate the second path of light, to obtain image light that carries image information;
controlling the sensing module to obtain color information of the first path of light; and
controlling the light source module to adjust weights of the light of the at least two colors based on the color information.

13. The method according to claim 12, wherein the controlling the light source module to adjust weights of the light of the at least two colors based on the color information comprises:

determining a color coordinate of the image light based on the color information;
generating a control signal if a difference between the color coordinate of the image light and a preset target color coordinate is greater than a threshold, wherein the control signal is for controlling and adjusting the weights of the light of the at least two colors;
sending the control signal to the light source module; and
controlling the light source module to adjust the weights of the light of the at least two colors based on the control signal.

Projection
screen

Projector
100a

FIG. 1a

100b

FIG. 1b

FIG. 1c

FIG. 2

Optical display apparatus 300

Modulation
module 303

Image
light

Second path
of light

First path
of light

Light splitting
module 302

Light

Light source
module 301

Sensing
module 304

Image
light

FIG. 3

Light source module

Collimating mirror

Red light

First light
source

Blue light

Second light
source

Green light

Light
emitting
component

Third light
source

FIG. 4a

Light source module

First light
source

Second light
source

Light emitting
component

Red light

Blue light

Green
light

Third
light
source

Second dichroic
mirror

First dichroic
mirror

FIG. 4b

Compound-eye lens

FIG. 4c

Adhesive
layer        PBS

Incident
light

P-polarized
light

S-polarized
light

FIG. 5a

Transflective
part

Light
splitting film

Flat
substrate

FIG. 5b

Incident light    Reflected light

Glass bottom layer

Electrode

Liquid
crystal
molecule

Silicon substrate

FIG. 5c

Optical lens

FIG. 6

Optical display apparatus 700

Processing
module
706

Light source module 701

First light source
7011

Second light source
7012

Modulation
module 703

Compound-
eye lens
7016

Red light

Blue light

Image
light

Second
polarized
light

Third
light
source
7013

First
polarized
light

Sensing
module
704

Polarizing
beam
splitter 702

Light

Green
light

Image
light

Second dichroic
mirror 7015

First dichroic
mirror 7014

Optical lens
705

Adjusted image light

FIG. 7a

Optical display apparatus 710

Processing
module
716

Light source module 711

First light source
7111

Second light source
7112

Modulation
module 713

Compound-
eye lens
7116

Red light

Blue light

First
path of
light

Image
light

Second
path of light

Third
light
source
7113

Sensing
module
714

Transflective
part 712

Light

Green
light

Image
light

Second dichroic
mirror 7115

First dichroic
mirror 7114

Optical lens
715

Adjusted image light

FIG. 7b

Optical display apparatus 720

Processing module 726

Light source module 721

First light source 7211

Second light source 7212

Compound-eye lens 7216

Red light

Blue light

Third light source 7213

Modulation module 723

Image light

Second path of light

First path of light

Sensing module 724

Transflective part 722

Image light

P-polarized light

Polarizer 727

Light

Green light

Second dichroic mirror 7215

First dichroic mirror 7214

Optical lens 725

Adjusted image light

FIG. 7c

Optical display apparatus 800

Color information

Light source module 801

Modulation
module 803

Processing
component 8011

Control signal

Image
light

Second
polarized light

First
polarized
light

Light

Sensing
module 804

Light splitting
module 802

Light emitting
component 8012

Adjusted
light

Image
light

Optical lens
805

Adjusted image light

FIG. 8

Sensing module

Processing component

S901. Information about a first spectrum

S902. Determine a second spectrum of image light based on the information about the first spectrum and a correspondence between the first spectrum and the second spectrum

S903. Determine a color coordinate of the image light based on the second spectrum and a correspondence between a spectrum and the color coordinate

S904. Determine, based on the color coordinate of the image light and a preset target color coordinate, whether a weight of light of each color needs to be adjusted

No

Yes

S906. Control a light emitting component to emit light of a corresponding color based on an initialized weight of light of each color

S905. Determine the weight of the light of each color, and generate a control signal based on the weight of the light of each color

FIG. 9a

I

T₁

PWM-R

T₂

PWM-B

T₃

PWM-G

T

FIG. 9b

| Processing component | | Light emitting component |
| --- | --- | --- |

S1001. Obtain a preset target color coordinate

S1002. Generate an initial signal based on the obtained preset target and a correspondence between a preset color coordinate and a weight of a current

S1003. Initial signal

S1004. Emit light of a corresponding color based on the received initial signal

FIG. 10

Optical display apparatus

Control signal

Sensing module 1104

Processing component 11041

Color information

Detection component 11042

Modulation module 1103

Image light

Second polarized light

First polarized light

Light splitting module 1102

Light

Light source module 1101

Adjusted light

Image light

Optical lens 1105

Adjusted image light

FIG. 11

Optical display apparatus 1200

Processing module 1206

Control signal

Color information

Modulation module 1203

Image light

Second polarized light

First polarized light

Sensing module 1204

Light splitting module 1202

Light

Light source module 1201

Adjusted light

Image light

Optical lens 1205

Adjusted image light

FIG. 12a

FIG. 12b

FIG. 13a

Vehicle

Sensor system 12

Peripheral device 16

Head up display system 22

Power supply 18

Control system 14

Computer system 20

Processor 2001

Memory 2002

FIG. 13b

S1401. Control a light source module to emit light

S1402. Control a modulation module to modulate second polarized light, to obtain image light that carries image information

S1403. Control a sensing module to obtain color information of first polarized light

S1404. Control the light source module to adjust a weight of light of each color in light of at least two colors based on the color information

FIG. 14

FIG. 15

FIG. 16

## INTERNATIONAL SEARCH REPORT

| International application No. |
| --- |
| **PCT/CN2022/117928** |

**A.      CLASSIFICATION OF SUBJECT MATTER**

G03B 21/00(2006.01)i;  G02B 27/01(2006.01)i

According to International Patent Classification (IPC) or to both national classification and IPC

**B.      FIELDS SEARCHED**

Minimum documentation searched (classification system followed by classification symbols)

G03B 21/-; G02B 27/-

Documentation searched other than minimum documentation to the extent that such documents are included in the fields searched

Electronic data base consulted during the international search (name of data base and, where practicable, search terms used)

CNTXT; WPABSC; OETXT; CNABS; WPABS; ENTXT; DWPI; ENTXTC; VEN: 显示, 传感, 探测, 偏振, 光, 合成, 调节, 控制, 调整, 二向镜, 分光, 色偏, 色彩, 颜色, 补偿, 光源, 偏振光, display+, PBS, polarization W beam W split+, sens+, detect +, colour, hue, color, tone, chrom+, shift+, cast, adjust+, compar+

**C.      DOCUMENTS CONSIDERED TO BE RELEVANT**

| Category* | Citation of document, with indication, where appropriate, of the relevant passages | Relevant to claim No. |
| --- | --- | --- |
| X | JP 2007079402 A (NIKON CORP.) 29 March 2007 (2007-03-29)<br>description, paragraphs [0006]-[0033], and figures 1-7 | 1, 2, 4-12 |
| Y | JP 2007079402 A (NIKON CORP.) 29 March 2007 (2007-03-29)<br>description, paragraphs [0006]-[0033], and figures 1-7 | 3, 13 |
| Y | CN 107621746 A (APPOTRONICS CORPORATION LTD.) 23 January 2018 (2018-01-23)<br>description, paragraphs [0092] and [0102]-[0111], and figures 1 and 5 | 3, 13 |
| A | CN 102012614 A (HONGFUJIN PRECISION INDUSTRY (SHENZHEN) CO., LTD. et al.)<br>13 April 2011 (2011-04-13)<br>entire document | 1-13 |
| A | CN 108600713 A (SUZHOU QISDA OPTOELECTRONIC CO., LTD. et al.) 28 September<br>2018 (2018-09-28)<br>entire document | 1-13 |
| A | CN 102231042 A (HE YINBO et al.) 02 November 2011 (2011-11-02)<br>entire document | 1-13 |

☑ Further documents are listed in the continuation of Box C.          ☑ See patent family annex.

| | | |
| --- | --- | --- |
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family | |

| Date of the actual completion of the international search | Date of mailing of the international search report |
| --- | --- |
| **31 October 2022** | **25 November 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/117928**

**C.    DOCUMENTS CONSIDERED TO BE RELEVANT**

| Category* | Citation of document, with indication, where appropriate, of the relevant passages | Relevant to claim No. |
|---|---|---|
| A | CN 102073203 A (HONGFUJIN PRECISION INDUSTRY (SHENZHEN) CO., LTD. et al.) 25 May 2011 (2011-05-25) entire document | 1-13 |
| A | CN 1916691 A (BENQ CORP.) 21 February 2007 (2007-02-21) entire document | 1-13 |
| A | CN 105388693 A (CHINA HUALU GROUP CO., LTD.) 09 March 2016 (2016-03-09) entire document | 1-13 |
| A | CN 101697036 A (SHENZHEN BOSHICHUANG ELECTRONICS CO., LTD.) 21 April 2010 (2010-04-21) entire document | 1-13 |
| A | JP 2017038204 A (SEIKO EPSON CORP.) 16 February 2017 (2017-02-16) entire document | 1-13 |
| A | CN 103003736 A (JOHNSON CONTROLS GMBH) 27 March 2013 (2013-03-27) entire document | 1-13 |
| A | CN 113238379 A (SHANGHAI TIANMA MICROELECTRONICS CO., LTD.) 10 August 2021 (2021-08-10) entire document | 1-13 |

Form PCT/ISA/210 (second sheet) (January 2015)

**INTERNATIONAL SEARCH REPORT**
**Information on patent family members**

International application No.

**PCT/CN2022/117928**

| Patent document cited in search report | | | Publication date (day/month/year) | Patent family member(s) | | | Publication date (day/month/year) |
|---|---|---|---|---|---|---|---|
| JP | 2007079402 | A | 29 March 2007 | None | | | |
| CN | 107621746 | A | 23 January 2018 | WO | 2018010467 | A1 | 18 January 2018 |
| CN | 102012614 | A | 13 April 2011 | None | | | |
| CN | 108600713 | A | 28 September 2018 | None | | | |
| CN | 102231042 | A | 02 November 2011 | None | | | |
| CN | 102073203 | A | 25 May 2011 | None | | | |
| CN | 1916691 | A | 21 February 2007 | None | | | |
| CN | 105388693 | A | 09 March 2016 | None | | | |
| CN | 101697036 | A | 21 April 2010 | None | | | |
| JP | 2017038204 | A | 16 February 2017 | None | | | |
| CN | 103003736 | A | 27 March 2013 | EP | 2577379 | A2 | 10 April 2013 |
| | | | | JP | 2013535019 | A | 09 September 2013 |
| | | | | KR | 20130086956 | A | 05 August 2013 |
| | | | | US | 2013182197 | A1 | 18 July 2013 |
| | | | | WO | 2011147501 | A2 | 01 December 2011 |
| CN | 113238379 | A | 10 August 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111271734X